(19) **Europäisches Patentamt / European Patent Office / Office européen des brevets**

(11) **EP 4 150 792 B1**

(12) # EUROPÄISCHE PATENTSCHRIFT

(45) Veröffentlichungstag und Bekanntmachung des Hinweises auf die Patenterteilung:
**08.10.2025 Patentblatt 2025/41**

(21) Anmeldenummer: **21724635.4**

(22) Anmeldetag: **07.05.2021**

(51) Internationale Patentklassifikation (IPC):
**H04B 10/114** (2013.01)     **H04B 10/116** (2013.01)
**H01S 3/00** (2006.01)     **H04B 10/564** (2013.01)

(52) Gemeinsame Patentklassifikation (CPC):
**H04B 10/1143; H04B 10/114;** H04B 10/564;
H04B 2210/08

(86) Internationale Anmeldenummer:
**PCT/EP2021/062104**

(87) Internationale Veröffentlichungsnummer:
**WO 2021/228697 (18.11.2021 Gazette 2021/46)**

(54) **AUGENSICHERE OPTISCH-DRAHTLOSE KOMMUNIKATION**

EYE-SAFE OPTICAL WIRELESS COMMUNICATION

COMMUNICATION OPTIQUE SANS FIL SANS DANGER POUR L'OEIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2020 DE 102020206180**

(43) Veröffentlichungstag der Anmeldung:
**22.03.2023 Patentblatt 2023/12**

(73) Patentinhaber: **Fraunhofer-Gesellschaft zur Förderung
der angewandten Forschung e.V.
80686 München (DE)**

(72) Erfinder:
• **KIRRBACH, René
01109 Dresden (DE)**
• **SCHNEIDER, Tobias
01109 Dresden (DE)**

(74) Vertreter: **König, Andreas Rudolf et al
Schoppe, Zimmermann, Stöckeler
Zinkler, Schenk & Partner mbB
Patentanwälte
Radlkoferstraße 2
81373 München (DE)**

(56) Entgegenhaltungen:
**WO-A2-02/056507      US-A1- 2003 026 002
US-A1- 2011 116 520**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf optische, drahtlose bzw. optische, kabellose Kommunikation, insbesondere einem Kommunikationsknoten zur drahtlosen, optischen Kommunikation, auf ein drahtloses optisches Übertragungssystem mit einem derartigen Kommunikationsknoten und auf ein Verfahren zur Bereitstellung einer Separationsoptik für ein drahtloses, optisches Übertragungssystem. Die vorliegende Erfindung bezieht sich ferner auf einen Hochleistungssender für die augensichere, optisch-drahtlose Kommunikation.

Bei der optisch-drahtlosen Kommunikation ist es stets das Ziel, die detektierte, optische Leistung am Empfänger zu erhöhen, da dies zu einem besseren Signal-zu-Rauschverhältnis (SNR, Signal-to-Noise-Ratio) am Empfänger führt [2]. Ein hohes SNR erlaubt eine geringe Bitfehlerrate, d. h., eine zuverlässige Datenübertragung. Darüber hinaus kann ein hohes SNR genutzt werden, um die Datenrate des Links zu erhöhen, indem beispielsweise die Modulationsbandbreite erhöht oder ein Multi-Level-Modulationsschema eingesetzt wird. Ein direkter Weg, das SNR am Empfänger/Receiver zu maximieren, besteht darin, die Signalleistung am Sender zu erhöhen. Für besonders hohe Datenraten werden heutzutage Laser (light amplification by stimulated emission of radiation) bzw. Laserdioden aufgrund von Modulationsbandbreiten von einigen Gigahertz bis einigen Zehn Gigahertz genutzt. Von Lasern emittierte Strahlbündel sind besonders geordnet, d. h. ihre Etendue (Produkt aus Strahlquerschnitt und Divergenzwinkel der Strahlen) ist besonders gering. Dadurch lassen sie sich mittels Linsen auf einen sehr kleinen Punkt fokussieren. Diese Fokussierbarkeit ist auch beim Auftreffen von Laserlicht auf das menschliche Auge gegeben. Aus diesem Grund ist die zulässige Laserleistung durch Augensicherheitsnormen (DIN EN 60825-1:2015-07 [3]) im Vergleich zu herkömmlichen Lampenvorrichtungen stärker reguliert. Damit ein Laser zur Kommunikation genutzt werden kann, ohne dass Abschirmungsmaßnahmen getroffen werden müssen, muss der Laser Laserklasse 1/1R oder Laserklasse 2/2R (wenn Laser sichtbar) entsprechen. Das Maß, in dem das SNR am Receiver durch das Erhöhen der Sendeleistung erhöht werden kann, ist deshalb begrenzt.

In der Praxis gibt es verschiedene Ansätze, den Sender eines optisch-drahtlosen Links als Laserklasse 1/1 R oder Laserklasse 2/2R zu klassifizieren:

1. Der Treiber des Lasers ist begrenzt, so dass die Leistung des Lasers so beschränkt ist, dass die Grenzwerte der Augensicherheit eingehalten werden. Hieraus ergibt sich der Nachteil geringer Sendeleistungen welche zu geringer Reichweite führen.

2. Der Laser wird so moduliert, dass er nur für sehr kurze Zeiträume strahlt bzw. nur für kurze Zeiträume in eine Richtung strahlt. So werden beispielsweise bei LIDAR (Light Detection and Ranging, lichtbasierte Abstandsmessung) starke Impulse ausgesendet, allerdings nur für eine kurze Zeit bzw. diese Impulse breiten sich nur für kurze Zeit in eine Richtung aus. Die Expositionsenergie für das Auge kann so unter den Grenzwerten gehalten werden. Nachteilig hierbei ist, dass nur ein Bruchteil der gesamten Zeit für Kommunikation genutzt werden kann. Dementsprechend ist die Datenrate begrenzt.

3. Vor dem Laser wird ein Diffusor platziert [2], der das Licht streut. Das Licht breitet sich dann allerdings zufällig in alle Richtungen aus, so dass ein erheblicher Teil der Lichtleistung für die Kommunikation verloren ist.

4. Ein sogenannter "Engineered Diffusor" [6] wird eingesetzt. Diese optischen Elemente weisen eine optimierte Struktur auf, die Licht mit einem definierten Eingangswinkel (typischerweise 0°, d. h., parallele Lichtstrahlen) auf ein definiertes Ausgangsprofil lenkt. Die hohe Effizienz ist vorteilhaft für Kommunikation. Nachteilig sind allerdings die hohen Herstellungskosten und der definierte Eingangswinkel. Letzterer beträgt typischerweise 0°, so dass eine zusätzliche Kollimatorlinse benötigt wird.

5. Einsatz eines holographischen Diffusors [2,4]. Die hierdurch erhaltene hohe Effizienz ist vorteilhaft für die Kommunikation. Teilweise können diese Diffusoren günstiger als Engineered Diffusoren hergestellt werden. Nachteilig ist der definierte Einfallswinkel. Der Ausgangswinkel ist typischerweise größer als der Einfallswinkel. Für kleine Sichtfelder wird eine zusätzliche Kollimatorlinse benötigt, d.h. man benötigt zwei optische Bauelemente. Nachteilig ist außerdem die Tatsache, dass das Ausgangsprofil einer Gaußverteilung folgt. Für die optisch-drahtlose Kommunikation wird häufig ein Top-Head Profil benötigt/bevorzugt, um die dynamische Reichweite des Links zu optimieren.

6. Einsatz mehrerer Laserquellen [5]. Durch den Einsatz mehrerer Emitter, beispielsweise durch Einsatz eines VCSEL-Arrays (Vertical-Cavity Surface-Emitting Laser, Oberflächenemitter) kann die Gesamtleistung auf mehrere Teilquellen aufgeteilt werden. Nachteilig hieran ist der komplexe Aufbau.

In US 2003/0026002 A1 ist eine Lichtquellenvorrichtung beschrieben, die für das menschliche Auge sicher ist.
In WO 02/056507 A2 ist eine optische Kommunikationsinfrastruktur beschrieben, die eine Mehrzahl von Teilstrahlen erzeugt.

In US 2011/0116520 A1 ist eine laserbasierte Lichtquelle zum Erzeugen von Laserlicht beschrieben.

Wünschenswert wären demnach Kommunikationsknoten und Kommunikationssysteme sowie Konzepte zum Bereitstellen derselben, die eine augensichere, Kommunikation mit hoher Reichweite und Datenrate ermöglichen.

Die Aufgabe der vorliegenden Erfindung besteht deshalb darin, Kommunikationsknoten und Kommunikationssysteme zu schaffen, die eine augensichere Hochgeschwindigkeits-Kommunikation mit hoher Reichweite und Datenrate ermöglichen.

Diese Aufgabe wird durch den Gegenstand der unabhängigen Patentansprüche gelöst.

Ein Kerngedanke der vorliegenden Erfindung besteht darin, erkannt zu haben, dass sich durch Einsatz einer geeigneten Separationsoptik eine Lichtleistung eines optischen Emitters dergestalt aufteilen lässt, dass mehrere optische Teilsignale erhalten werden. Die mehreren optischen Teilsignale werden empfängerseitig und/oder augenseitig auf voneinander verschiedene örtliche Bereiche fokussiert, weshalb die aufgeteilte Lichtleistung auf voneinander getrennte Fokusbereiche trifft, so dass zwar mit hoher Lichtleistung gesendet werden kann, eine Schädigung des menschlichen Auges jedoch reduziert oder verhindert werden kann. Die hohe Sendeleistung ermöglicht Kommunikation mit hoher Reichweite und Datenrate. Durch Auslegung einer entsprechenden Separationsoptik, durch Integration einer derartigen Separationsoptik in einen Kommunikationsknoten und durch Verwendung eines derartigen Kommunikationsknotens in einem optisch-drahtlosen Kommunikationsnetzwerk können die vorgenannten Aufgaben erfüllt werden.

Gemäß einem Ausführungsbeispiel umfasst ein Kommunikationsknoten, der zur optisch-drahtlosen Kommunikation in einem optisch-drahtlosen Kommunikationsnetzwerk eingerichtet ist, eine Eingangsschnittstelle, die ausgebildet ist, um ein Datensignal zu empfangen. Der Kommunikationsknoten umfasst ferner einen optischen Transmitter, der ausgebildet ist, um das Datensignal in ein optisches Signal mit einer optischen Leistung umzusetzen. Ferner weist der Kommunikationsknoten eine Separationsoptik auf, die ausgebildet ist, um das optische Signal in eine Mehrzahl von optischen Teilsignalen mit einem zugeordneten Spektralbereich räumlich zu teilen, um die optische Leistung auf eine Mehrzahl von optischen Teilsignalen aufzuteilen, wobei die Mehrzahl von Spektralbereichen zumindest teilweise übereinstimmt. Der Kommunikationsknoten ist ausgebildet, um die Mehrzahl von optischen Teilsignalen für die optisch-drahtlose Kommunikation auszusenden. Die Mehrzahl von optischen Teilsignalen wird bei einer gemeinsamen Fokussierung, bei Verwendung einer empfängerseitigen Optik oder bei einer Fokussierung am oder im menschlichen Auge an räumlich disjunkten Orten einer Bildebene fokussiert.

Gemäß einem Ausführungsbeispiel wird ein optisch-drahtloses Übertragungssystem geschaffen, das einen vorgenannten Kommunikationsknoten aufweist und ferner einen Empfänger umfasst, der ausgebildet ist, um zumindest einen Anteil der Mehrzahl von Teilsignalen zu empfangen, wobei ein Sichtfeld des Kommunikationsknotens an eine Empfangsoptik des Empfängers angepasst ist. Vorteilhaft hieran ist, dass durch die Anpassung Verluste im optisch-drahtlosen Übertragungsweg reduziert bzw. vermieden werden können.

Gemäß einem Ausführungsbeispiel umfasst ein Verfahren zum Bereitstellen einer Separationsoptik für einen optisch-drahtlosen Kommunikationsknoten mit einer Vielzahl von optisch-aktiven Oberflächen eine Mehrzahl von Schritten, die für jede der optisch-aktiven Oberflächen ausgeführt werden. Das Verfahren umfasst ein Projizieren einer inhomogenen Strahlungsleistung eines optischen Emitters auf einen Projektionsbereich durch Definieren einer Vielzahl von Teilbereichen des Projektionsbereichs, so dass eine Teilstrahlungsleistung der auf den Teilbereich auftreffenden Strahlungsleistung innerhalb eines Toleranzbereichs in der Vielzahl von Teilbereichen gleich ist. Das Verfahren umfasst ein Definieren von Eingangswinkeln der Strahlungsleistung auf die optisch-aktive Fläche der Separationsoptik und ein Zuordnen jeweils eines zugehörigen Ausgangswinkels der Vielzahl von Teilstrahlungsleistungen aus der Separationsoptik, wobei die Ausgangswinkel aus den Teilbereichen des Projektionsbereichs abgeleitet werden. Das Verfahren umfasst ein Definieren der Vielzahl der Teilbereiche für das optisch-aktive Flächenelement der Separationsoptik so, dass diese bei einem Eintreffen der Strahlungsleistung diese mit der Vielzahl von optisch wirksamen Oberflächen in eine, einem jeweiligen Teilbereich zugeordneten, Teilstrahlungsleistung für den Projektionsbereich umformt. Das Verfahren umfasst ferner ein Herstellen der Separationsoptik mit der Vielzahl von optisch-wirksamen Oberflächen. Das Verfahren wird ausgeführt, dass die Mehrzahl von optischen Teilsignalen bei einer gemeinsamen Fokussierung, bei Verwendung einer empfängerseitigen Optik oder bei einer Fokussierung am oder im menschlichen Auge an räumlich disjunkten Orten einer Bildebene fokussiert wird.

Weitere vorteilhafte Ausgestaltungen sind in den abhängigen Patentansprüchen definiert.

Ausführungsbeispiele der vorliegenden Erfindung werden nachfolgend Bezug nehmend auf die beiliegenden Zeichnungen erläutert. Es zeigen:

Fig. 1 ein schematisches Blockschaltbild eines Kommunikationsknotens gemäß einem Ausführungsbeispiel;

Fig. 2a ein schematisches Blockschaltbild eines optisch-drahtlose Übertragungssystems gemäß einem Ausführungsbeispiel, bei dem der Kommunikationsknoten einen Transmitter mit einer modulierten Strahlungsquelle aufweist;

Fig. 2b    ein schematisches Blockschaltbild eines optisch-drahtlosen Übertragungssystems gemäß einem Ausführungsbeispiel, bei dem der Kommunikationsknoten einen Transmitter mit einer unmodulierten Strahlungsquelle aufweist;

Fig. 3a    eine schematische Seitenschnittansicht einer Separationsoptik mit einer planen Oberfläche gemäß einem Ausführungsbeispiel;

Fig. 3b    eine schematische Seitenschnittansicht einer Separationsoptik mit zwei gekrümmten Oberflächen gemäß einem Ausführungsbeispiel;

Fig. 3c    eine schematische Seitenschnittansicht eines Kommunikationsknotens, der ein Element zur Laufzeitdifferenzkompensation aufweist, gemäß einem Ausführungsbeispiel;

Fig. 4a    eine schematische Seitenschnittansicht eines Teils eines Kommunikationsknotens gemäß einem Ausführungsbeispiel mit einer Separationsoptik, die zumindest teilweise reflektiv gebildet ist;

Fig. 4b    eine schematische Seitenschnittansicht eines Teils eines Kommunikationsknotens gemäß einem Ausführungsbeispiel, bei dem eine Separationsoptik ebenfalls reflektierend gebildet ist und bei dem ein optischer Transmitter in einer Ebene der Separationsoptik angeordnet ist;

Fig. 5a-b    schematische Darstellungen von Separationsoptiken gemäß Ausführungsbeispielen, die totalreflektierende Oberflächen umfassen; und

Fig. 6    ein schematisches Ablaufdiagramm eines Verfahrens zum Bereitstellen einer Separationsoptik in Übereinstimmung mit hierin beschriebenen Ausführungsbeispielen.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres mit einander kombiniert werden, solange es nicht explizit gegenteilig beschrieben ist.

Nachfolgende Ausführungsbeispiele beziehen sich auf eine optisch-drahtlose Signalübertragung oder Datenübertragung. Diese wird im Rahmen der hierin beschriebenen Ausführungsbeispiele auch als Li-Fi (Light Fidelity; Lichtübertragung) bezeichnet. Der Begriff "Li-Fi" bezieht sich dabei auf Begriffe wie IrDA (Infrared Data Association) oder OWC (Optical Wireless Communication; optische drahtlose Kommunikation). Das bedeutet, die Ausdrücke "optisch-drahtlose Datenübertragung" und "Li-Fi" werden synonym verwendet. Als optisch-drahtlose Datenübertragung wird hierbei verstanden, ein elektromagnetisches Signal durch ein freies Übertragungsmedium, beispielsweise Luft oder ein anderes Fluid, zu übertragen. Hierfür können beispielsweise Wellenlängen in dem ultravioletten (UV) Bereich mit zumindest 53 nm und dem Infrarotbereich, beispielsweise höchstens 1550 nm verwendet werden, wobei auch andere Wellenlängen möglich sind, die sich von für Funkstandards benutzten Wellenlängen unterscheiden. Eine optisch-drahtlose Datenübertragung ist auch von einer fasergebundenen optischen Datenübertragung zu unterscheiden, die beispielsweise mittels Lichtwellenleiter oder Lichtwellenleiterkabel implementiert wird.

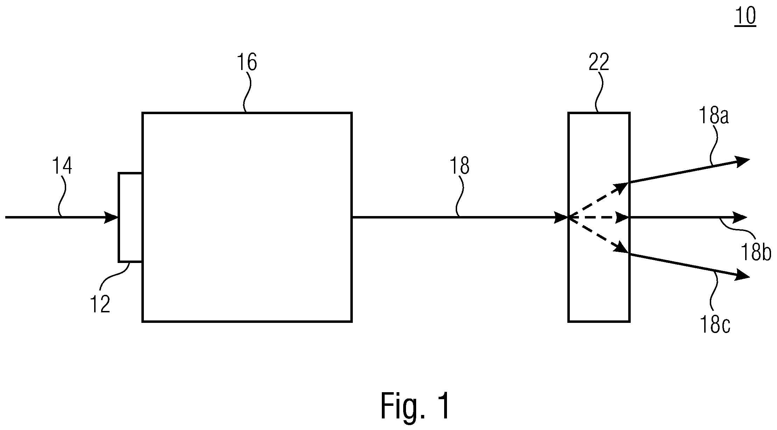

Fig. 1 zeigt ein schematisches Blockschaltbild eines Kommunikationsknotens 10 gemäß einem Ausführungsbeispiel. Der Kommunikationsknoten 10 umfasst eine Eingangsschnittstelle 12, die ausgebildet ist, um ein Datensignal 14 zu empfangen. Das Datensignal 14 kann kabelgebunden sein und/oder drahtlos empfangen werden, wobei hierfür beliebige Übertragungsverfahren möglich sind, beispielsweise drahtlose Netzwerke und/oder drahtlose, optische Übertragungsmedien.

Der Kommunikationsknoten umfasst ferner einen optischen Transmitter 16, der ausgebildet ist, um das Datensignal 14 in ein optisches Signal 18 umzusetzen, das eine optische Leistung aufweist. Der optische Transmitter 16 kann beispielsweise einen Laser oder eine Laserdiode umfassen. Andere Beispiele für einen optischen Transmitter sind beispielsweise Leuchtdioden (LED), wobei insbesondere Hochgeschwindigkeits-LEDs, wie RC-LED (resonant cavity LED), oder Mikro-LEDs in Betracht kommen. Alternativ sind jedoch auch andere Elemente zur Erzeugung des optischen Signals 18 möglich, beispielsweise fluoreszierende Emitter oder andere Leuchtmittel. Auch kommen Kombinationen aus den genannten Optionen in Betracht.

Obwohl der Kommunikationsknoten 10 als Sender eines optisch-drahtlosen Signals beschreiben ist, kann er basierend auf einer entsprechenden Konfiguration des Transmitters 16, etwa als Empfänger, zum Senden und/oder Empfangen drahtloser optischer Signale eingerichtet sein. Das bedeutet, der Transmitter 16 kann auch als reiner Empfänger oder als reiner Sender oder als eine Kombination hieraus gebildet sein.

Der Kommunikationsknoten 10 umfasst ferner eine Separationsoptik 22, die ausgebildet ist, um das optische Signal 18 in eine Mehrzahl von optischen Teilsignalen 18a-c räumlich zu teilen. Die Anzahl der optischen Teilsignale 18a-18c kann zumindest 2, zumindest 3, zumindest 4, zumindest 5 oder mehr betragen, wobei die Anzahl auch zumindest 10, zumindest 100 oder zumindest 1000 betragen kann. Die Separationsoptik 22 ist dabei ausgelegt, um das optische Signal 18 räumlich zu zerteilen, das bedeutet, die Wellenlängenbereiche der Teilsignale 18a-18c können ganz oder teilweise übereinstimmen und auch mit dem optischen Signal 18 übereinstimmen. Unterschiede in den Wellenlängenbereichen können jedoch beispielsweise durch unterschiedliche Absorptionen oder Dämpfungen entstehen, die in jeweiligen Teilbereichen der Separationsoptik 22 auf das optische Signal 18 einwirken. Die Teilsignale 18a-c weisen jedoch eine identische Quelle auf, nämlich das optische Signal 18. Anders ausgedrückt kann die Separationsoptik 22 dafür genutzt werden, um das optische Signal 18 in die optischen Teilsignale 18a-c aufzuteilen, die räumlich voneinander beabstandet sind, darüber hinaus jedoch in Bezug auf den Informationsgehalt und dem Wellenlängenbereich übereinstimmen.

Der Kommunikationsknoten 10 ist ausgebildet, um die Mehrzahl von optischen Teilsignalen für die optisch-drahtlose Kommunikation auszusenden. Hierbei weisen die optischen Teilsignale 18a-c eine im Wesentlichen gleiche Richtung auf, die beispielsweise hin zu einem Empfänger gerichtet sein können, der zumindest einen Anteil, hohen Anteil oder alle der optischen Teilsignale 18a-c empfängt und miteinander kombiniert, so dass aufgrund der Kombination der empfangenen, optischen Teilsignale 18a-c die Summe der empfangen optischen Leistung am Empfänger hoch ist und ein hohes SNR erhalten werden kann. Dies ermöglicht eine hohe Übertragungsqualität und damit eine hohe Bandbreite erzielt werden kann. Durch die Aufteilung des optischen Signals 18 in die Teilsignale 18a-c kann ebenfalls eine hohe Augensicherheit erhalten werden, da die Mehrzahl von optischen Teilsignalen bei einer gemeinsamen Fokussierung, etwa bei Verwendung einer entsprechenden Optik empfängerseitig oder auch bei einer Fokussierung am oder im menschlichen Auge, an räumlich disjunkten Orten einer Bildebene fokussiert wird, was zu einer Beanspruchung oder Schädigung an den räumlich disjunkten Orten einer Bildebene des menschlichen Auges, der Netzhaut, führen kann. Das bedeutet, bevor eine entsprechende Schädigung eintritt, kann eine insgesamt höhere Lichtleistung übertragen werden, so dass verglichen mit einem einzigen Teilstrahl eine höhere Signalleistung übertragen werden kann, gleichzeitig aber auf die Verluste eines Diffusors verzichtet wird, was vorteilhaft für das Leistungsbudget ist. Beispielsweise kann ein Abstand von Brennpunkten bei einer gemeinsamen Fokussierung erhalten werden, deren Strahlungsleistung einzeln unterhalb der zuvor genannten Norm DIN EN 60825-1 oder IIC 60825-1: 2014 liegen. So kann beispielsweise jeder einzelne dieser Brennpunkte die entsprechende Norm erfüllen. Da jedoch eine räumliche Beabstandung der Brennpunkte vorliegt, wird das Auge nicht in einem Maß geschädigt, das die entsprechenden Grenzwerte erreicht, weshalb vergleichsweise höhere Lichtleistungen im Ausgangssignal 18 zulässig sind. Der Grenzwert kann somit verstanden werden als ein flexibler Wert. Dieser kann nach einer Berechnungsvorschrift errechnet werden, in der die Ausdehnung der sogenannten scheinbaren Quelle enthalten ist, wofür die Ausdehnung des Fokuspunktes gemessen werden kann. Würden bspw. 2 oder mehr Fokuspunkte betrachtet, könnte der Durchmesser zur Grenzwertbestimmung angenommen werden, den diese 2 oder mehr Fokuspunkte zusammen bilden. Der sich ergebende Grenzwert ist dann verglichen mit einem einzelnen Fokuspunkt aber deutlich höher, da der Durchmesser höher ist. Um als augensicher klassifiziert zu werden, kann es erforderlich sein, dass beide Varianten erfüllt sind, d.h.:

- Jeder Fokuspunkt ist - für sich betrachtet - augensicher (für diese Betrachtung ist der Grenzwert vergleichsweise gering, die Leistung des einen Fokuspunktes ist aber auch gering)
- Alle Fokuspunkte zusammengenommen sind augensicher (hier ist der Grenzwert nun deutlich höher)

Der optische Transmitter 16 kann ausgebildet sein, um das optische Signal 18 mit einer Kommunikationswellenlänge bereitzustellen. Die Separationsoptik 22 kann absorptionsarm für diesen Kommunikationswellenlängenbereich gebildet sein, was geringe optische Verluste ermöglicht.

Der Kommunikationsknoten 10 kann ausgebildet sein, um das optisch-drahtlose Signal in einer für das menschliche Auge sichtbaren Wellenlänge auszusenden, und um mit dem optisch-drahtlosen Signal eine Beleuchtung einer Umgebung des Kommunikationsknotens bereitzustellen. Dies ermöglicht eine synergetische Nutzung einer Strahlungsleistung, sowohl zur Datenübertragung als auch zur Ausleuchtung. Dies ist insofern unproblematisch, als mittels der Separationsoptik 22 das menschliche Auge vor Schäden geschützt wird, selbst wenn hohe Lichtleistungen verwendet werden. Alternative Ausführungsbeispiele sind, ein für das menschliche Auge nicht sichtbares Wellenlängenspektrum zu nutzen. Beispielsweise könnte hierfür das infrarote, nah-Infrarote oder ultraviolette Spektrum genutzt werden.

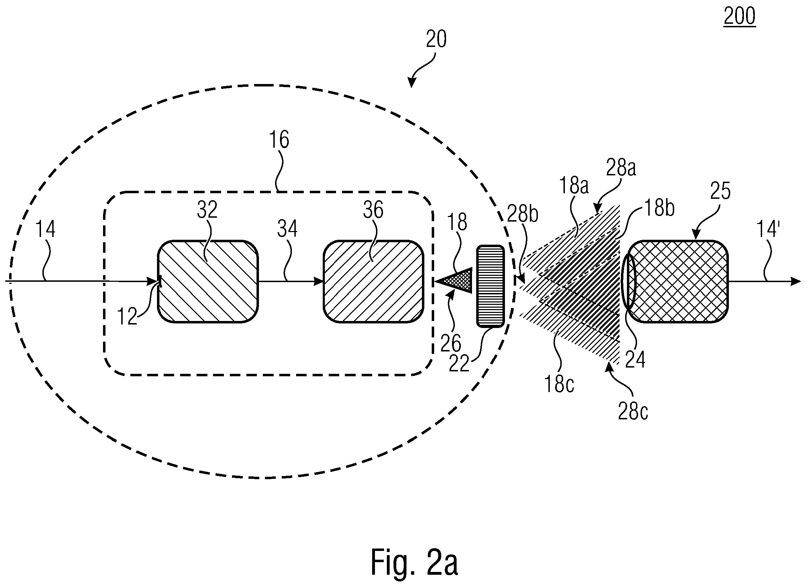

Fig. 2a zeigt ein schematisches Blockschaltbild eines optisch-drahtlosen Übertragungssystems 200 gemäß einem Ausführungsbeispiel. Das optisch-drahtlose Übertragungssystem 200 umfasst einen Kommunikationsknoten 20 gemäß einem Ausführungsbeispiel und einen Empfänger 25 gemäß einem Ausführungsbeispiel. Der Empfänger 25 ist ausgebildet, um zumindest einen Anteil der Mehrzahl von Teilsignalen 18a-18c zu empfangen. Ein Sichtfeld des Kommunikationsknotens 20 ist dabei an eine Empfangsoptik 24 des Empfängers 25 angepasst. Der Empfänger 25 ist ausgebildet, um basierend auf den Teilsignalen 18a-18c ein Datensignal 14' zu erzeugen, dessen Inhalt auf dem Datensignal 14 basiert.

Ein typischer Abstrahlwinkel im Sinne eines Halbwinkels des Transmitters 16, das bedeutet, ein Halbwinkel des Strahlbündels 26 kann beispielsweise in einem Bereich von 3° bis 50°, bevorzugt zwischen 6° und 30° und besonders bevorzugt zwischen 8° und 20° liegen, insbesondere bei der Verwendung von VCSEL oder anderen Lasern, die ein rotationssymmetrisches Ausgangsprofil aufweisen können. Kantenemitter, die bspw. polygon, etwa rechteckig, gebildet sein können, können dahingegen einen Abstrahlwinkel zwischen 1°x3° und 15°x45°, bevorzugt zwischen 3°x8° und 12°x30° und besonders bevorzugt zwischen 6°x12° und 9°x25° aufweisen.

Der Empfänger 25 kann so angeordnet sein, dass die Empfangsoptik 24 zumindest 70% eines Flächenanteils eines Gesamtgesichtsfelds des Kommunikationsknotens 20 empfängt, das bedeutet, zumindest 70% einer Fläche, die durch die Gesamtzahl der optischen Teilsignale 18a-18c ausgeleuchtet wird, wird durch die Empfangsoptik 24 empfangen, was ein hohes SNR bzw. geringe Lichtleistungen ermöglicht.

Der Kommunikationsknoten 20 kann ähnlich aufgebaut sein, wie der Kommunikationsknoten 10. Der Kommunikationsknoten 10 kann auch alternativ oder zusätzlich in dem optischen Übertragungssystem 200 angeordnet werden. Die Separationsoptik 22 kann ausgebildet sein, um ein Strahlbündel 26 des optischen Transmitters 16, das bedeutet, ein das optische Signal 18 formendes Strahlbündel, und eine Mehrzahl von Teil-Strahlbündel 28a-28c aufzuteilen, die jeweils durch die Teilsignale 18a-c repräsentiert werden können. Die Mehrzahl von Teil-Strahlbündel 28a-c kann zusammengenommen ein Gesamtgesichtsfeld oder Ausleuchtungsbereich des Kommunikationsknotens 20 formen. Es ist dabei möglich und bevorzugt, aber nicht notwendig, dass sich die Strahlbündel 28a-c überlappen.

Der optische Transmitter 16 des Kommunikationsknotens 20 kann einen Treiber 32 umfassen, der ausgebildet ist, um basierend auf dem Datensignal 14 ein Treibersignal oder Signalstrom 34 bereitzustellen, um einen Emitter 36 zu steuern, etwa eine LED, einen Laser oder eine Laserdiode, um so das optische Signal 18 zu erzeugen. Hierzu kann die Eingangsschnittstelle 12 beispielsweise mit dem Treiber 32 verbunden sein oder ein Teil desselben sein. Insbesondere vorteilhaft ist die Verwendung eines Lasers/Laserdiode, da durch die Separationsoptik 22 der Einsatz hoher Sendeleistungen ermöglicht wird.

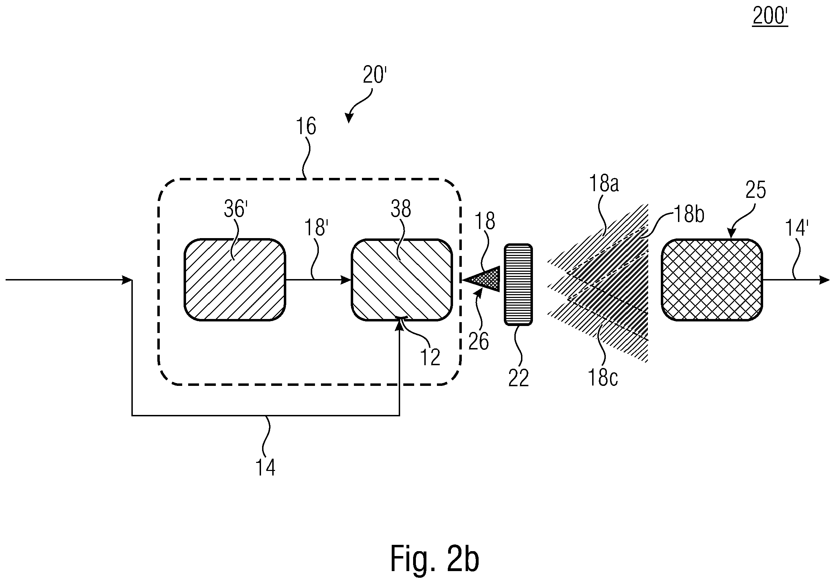

Fig. 2b zeigt ein schematisches Blockschaltbild eines weiteren optisch-drahtlosen Übertragungssystems 200' gemäß einem Ausführungsbeispiel. Im Vergleich zum optisch-drahtlosen Übertragungssystem 200 aus Fig. 2a ist ein Kommunikationsknoten 20' in einer von dem Kommunikationsknoten 20 verschiedenen Konfiguration vorgesehen, um das optische Signal 18 zu erzeugen. Beispielsweise kann ein Emitter 36' als unmodulierte, d.h. konstante Strahlungsquelle betrieben werden, um ein unmoduliertes, gegebenenfalls informationsfreies optisches Signal 18' zu erhalten. Dieses wird mittels eines Modulators 38, der das Datensignal 14 mittels der Eingangsschnittstelle 12 empfangen kann, manipuliert bzw. moduliert, um das optische Signal 18 zu erhalten.

Es wird darauf hingewiesen, dass ein Ort der Eingangsschnittstelle 12 in den hierin beschriebenen Ausführungsbeispielen lediglich beispielhaft gewählt ist und die Schnittstelle auch an anderer Stelle angeordnet sein kann und mittels einer Datenübertragung Kommunikationsknoten-intern an eine andere Stelle übertragen werden kann.

In anderen Worten zeigen die Fig. 2a und 2b zwei unterschiedliche mögliche Ausführungen der gesamten Datenübertragungsstrecke mit optischen Hochleistungssendern.

Das System aus Fig. 2a setzt einen Transmitter mit direkter Modulation des Emitters ein. Das System gemäß Fig. 2b verwendet hingegen einen Emitter mit externer Signalmodulation. In Fig. 2a wird ein eingehendes Signal 14 dargestellt, welches optisch-drahtlos übertragen werden soll. Es handelt sich dabei beispielsweise um ein Breitband-moduliertes Signal (beispielsweise On-Off-Keying moduliert) oder um ein schmalbandig-moduliertes Signal (etwa umfassend einen Einzelträger oder mehrere Träger, beispielsweise im Orthogonal-Frequenzmultiplex). Das Signal wird in einen Treiber 32 eingespeist, der einen Signalstrom 34 durch den Emitter 36 treibt bzw. die entsprechende Signalspannung an dem Emitter (z. B. LED, Laser, Laserdiode) anlegt, mit dem Ziel, das optische Ausgangssignal 18 entsprechend zu modulieren. Das Signal 18 wird mit einem, für den Emitter 36 charakteristischen Profil abgestrahlt. Die Separationsoptik 22 wird verwendet, um das optische Signal 18 in mehrere Strahlbündel 18a-c bzw. $18_i$ ($i \in [1; N]$, mit N $\geq$ 2) zu untergliedern, welche dann entsprechend das Sichtfeld ausleuchten. Auf den optischen Empfänger 25 treffen mehrere oder gar alle Strahlbündel $18_i$ auf. In der Regel bedeutet das aber, dass nur Teile der Lichtleistung der Strahlbündel $18_i$ auf den Empfänger treffen, da mitunter versucht wird, einen großen Bereich auszuleuchten, um eine große Abdeckung zu erreichen. Der Empfänger 25 wandelt das optische Signal in ein elektrisches Ausgangssignal 14' um und besteht dabei beispielsweise aus den üblichen optischen, optoelektronischen, elektronischen und elektrischen Komponenten. Insofern wird auf eine detaillierte Beschreibung des Empfängers 25 an dieser Stelle verzichtet.

Fig. 2b repräsentiert ein eingehendes Signal, welches ebenfalls optisch-drahtlos übertragen werden soll. Analog zu Fig. 2a ist es bereits breitbandig oder auch schmalbandig moduliert. Das Signal 14 wird in einem externen Modulator 38, etwa umfassend einen Mach-Zehnder-Modulator, akustisch-optische Modulatoren, elektro-optische Modulatoren, Modulatoren basierend auf Multi-Quantenschichten oder dergleichen, eingespeist. Der Modulator 38 moduliert das optische Ausgangssignal 18' des Emitters 36'. Im Gegensatz zum System 200 ist der Emitter 36' im System 200' beispielhaft eine unmodulierte Strahlungsquelle, das heißt, die Ausgangsleistung ist zumindest annähernd konstant (beispielsweise im Sinne eines CW-Werts (CW = Continuous Wave, kontinuierliche Welle) und der externe Modulator 38 ändert beispielsweise seine Absorptionseigenschaften, um ein moduliertes, optisches Ausgangssignal 18 zu erzeugen. Die Komponenten 26, 22, $18_i$, 25 und 14' können dabei identisch oder zumindest ähnlich zu denen im optisch-drahtlosen Übertragungssystem 200 sein.

Das bedeutet, der Kommunikationsknoten kann ausgebildet sein, um das Datensignal als breitbandig oder schmalbandig moduliertes Datensignal zu empfangen und zu verarbeiten. Wie in Fig. 2a dargestellt, kann der optische Transmitter 16 eine modulierende Strahlungsquelle 36 umfassen. Alternativ oder zusätzlich kann, wie in Fig. 2b dargestellt, der optische Transmitter 16 neben dem optischen Emitter 36' zum Bereitstellen eines optischen Signals 18' und einen Modulator 38 umfassen. Der Modulator 38 kann ausgebildet sein, um das optische Signal 18' zu empfangen und zu modulieren, um so das optische Signal 18 als moduliertes Signal bereitzustellen. Der Modulator 38 kann ausgebildet sein, um das optische Signal 18' basierend auf einer Stromsteuerung zu modulieren, beispielsweise indem eine Intensitätsmodulation und/oder eine Polarisationsmodulation implementiert wird.

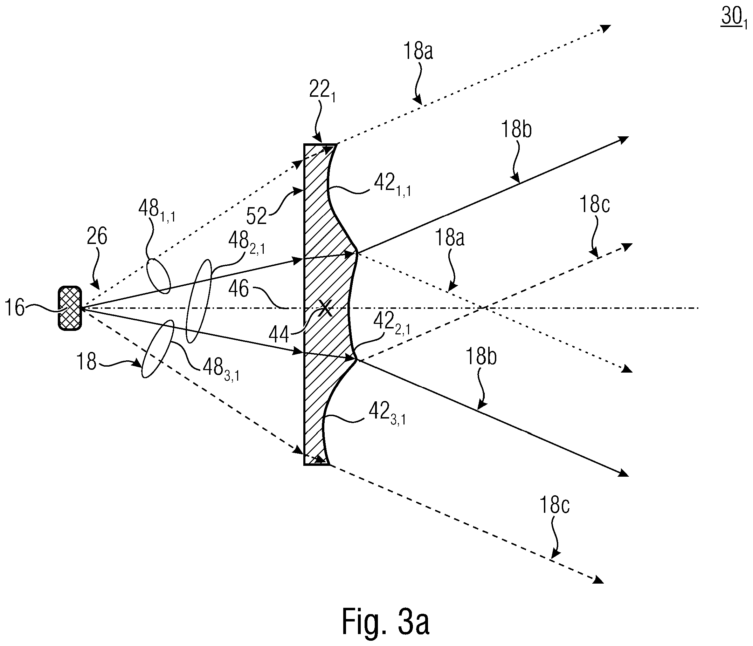

Fig. 3a zeigt eine schematische Seitenschnittansicht eines Kommunikationsknotens $30_1$ mit einer Separationsoptik $22_1$ gemäß einem Ausführungsbeispiel, die in dem Kommunikationsknoten 10 und/oder dem optisch-drahtlosen Übertragungssystem 200 oder 200' eingesetzt werden kann, um das optische Signal 18 in die Teilsignale $18_i$ aufzuteilen. Beispielhaft dargestellt ist hierzu der Transmitter 16, der prinzipiell in Übereinstimmung mit den Erläuterungen zu Fig. 1, Fig. 2a und/oder Fig. 2b gebildet sein kann. Die Separationsoptik $22_1$ kann eine Mehrzahl oder Vielzahl optisch wirksamer Oberflächen 42 aufweisen, die beispielsweise in einem zweidimensionalen Array oder Feld angeordnet sein können, insbesondere einem NxM-Feld. Die optisch wirksamen Oberflächen werden deshalb mit Indices i mit (i $\in$ [1; $N$] und j mit j $\in$ [1; M]) bezeichnet, in der Form $42_{i,j}$. Zumindest eines aus N und M ist dabei $\geq 2$. Die Indices können einen Hinweis über eine Platzierung des jeweiligen Elements in dem Feld liefern und zur Unterscheidbarkeit herangezogen werden. Beispielhaft dargestellt ist in der Fig. 3a eine Anzahl von drei Elementen für N = 1, das bedeutet, optisch wirksame Oberflächen $42_{1,1}$, $42_{2,1}$ und $42_{3,1}$. Die optisch wirksamen Oberflächen 42 können vereinfacht als Teillinse einer Linsenkombination bezeichnet werden, das bedeutet, zumindest eine der optisch wirksamen Oberflächen ist als Teillinse gebildet, die ausgebildet ist, um einen zugeordneten Teil des optischen Signals 18 zu brechen, insbesondere den Teil des optischen Signals 18, der auf die optisch wirksame Oberfläche 42 trifft. Jede der optisch wirksamen Oberflächen 42 kann als Freiform gebildet sein.

Ein Mittelpunkt 44 der Separationsoptik, etwa ein Masseschwerpunkt oder ein geometrischer Mittelpunkt, kann dabei mit einer Abweichung von höchstens 2 mm, 0,5 mm oder 0,1 mm auf einer optischen Achse 46 des Transmitters 16 angeordnet sein. Durch die später noch detailliert beschriebene Auslegung der optisch wirksamen Oberflächen kann ungeachtet dessen eine Ablenkung der optischen Teilsignale 18a, 18b und/oder 18c erhalten werden. Alternative Ausführungsbeispiele sehen vor, den Mittelpunkt 44 abseits der optischen Achse 46 des optischen Transmitters 16 anzuordnen. Dies ermöglicht einen weiteren Freiheitsgrad, in dem sowohl für plane, ebene Oberflächen 52 als auch für gekrümmte Oberflächen 52' ein Einfallswinkel optischer Strahlung ausgehend vom optischen Transmitter 16 auf die Oberfläche variiert werden kann.

So können Strahlbündel $48_{i,j}$ einer jeweiligen optisch wirksamen Oberflächen $42_{i,j}$ zugeordnete werden und mittels der optisch wirksamen Oberfläche $42_{i,j}$ eine Wirkung auf das Strahlbündel $48_{i,j}$ definiert werden, etwa eine Fokussierung, Streuung und/oder Richtungsänderung.

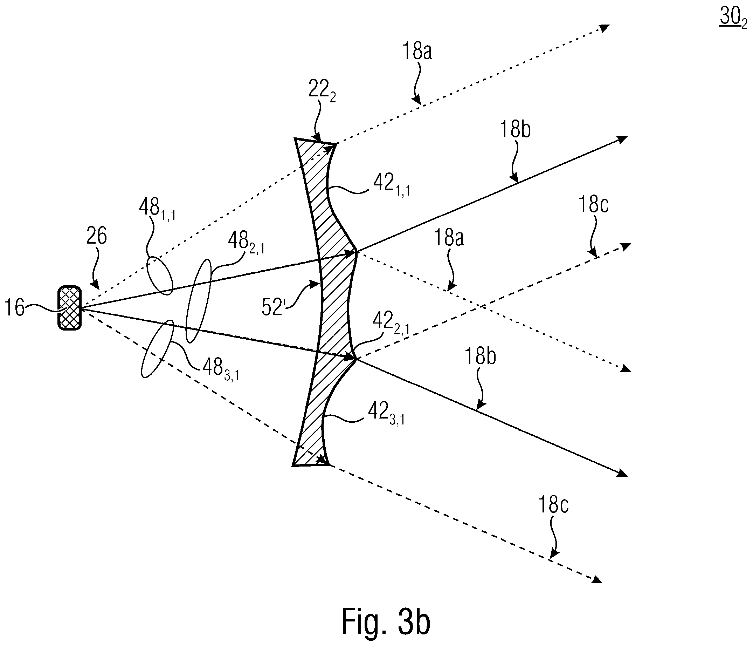

Eine dem Transmitter 16 zugewandte Oberfläche 52 der Separationsoptik $22_1$ kann dabei plan oder eben gebildet sein, wie es in Fig. 3a dargestellt ist, kann aber auch hiervon abweichen und/oder optisch wirksam sein, wie es für die Oberfläche 52' der Separationsoptik $22_2$ aus Fig. 3b gezeigt ist. Die Oberfläche 52' kann dabei beliebig angepasst werden, beispielsweise zumindest teilweise als sphärische Oberfläche, zumindest teilweise als asphärische Oberfläche, konvex oder konkav oder auch als Freiform beziehungsweise sonstige Form gebildet sein, etwa um ein Linsenvolumen zu verringern oder zu vergrößern oder um eine Toleranzkompensation oder Laufzeitkompensation zu erreichen.

Beide Separationsoptiken $22_1$ und $22_2$ ermöglichen es, ebenso wie die anderen hierin beschriebenen Separationsoptiken, die optischen Teilsignale $18_i$ mit einer übereinstimmenden Dateninformation zu erzeugen, da sie sämtlich aus einer einzigen Datenquelle stammen können. Die Separationsoptiken können so in einem Kommunikationsknoten angeordnet werden, dass die Separationsoptik zumindest 80%, zumindest 90% oder zumindest 95% einer von dem optischen Transmitter emittierten Strahlungsleistung empfängt. Eine optische Signalleistung des optischen Signals kann dabei so ausgeführt sein, dass es ohne die Separationsoptik eine Augensicherheit für das menschliche Auge überschreitet, das bedeutet schädigt oder die jeweilige Norm/Anforderung nicht erfüllt, die Mehrzahl von optischen Teilsignalen in Summe durch die Separationsoptik die Augensicherheit dahingegen wahrt.

Dies kann, wie beschrieben, dadurch erhalten werden, dass die unterschiedlichen Strahlbündel oder Teilsignale räumlich beabstandet voneinander fokussiert werden, was lokal zu einer Unterschreitung der Grenzwerte führt und im Flächenmittel ebenfalls eine Unterschreitung ermöglicht. Dabei kann die Separationsoptik 22 ein Mehrfachbild des optischen Signals 18 des Transmitters erzeugen, so dass ebenso wie ein Bild auch ein Dateinhalt der Teilsignale $18_i$ identisch oder gleich ist. Jedes optische Teilsignal $18_i$ kann dabei an ein gemeinsames Gesamtsichtsfeld der Mehrzahl von optischen Teilsignalen angepasst sein, das bedeutet, ein Sichtfeld oder einen Ausleuchtungsbereich des Kommunikationsknotens. So können beispielsweise Zielvorgaben über eine Strahlungsleistungsverteilung am Empfänger unter Berücksichtigung entsprechender Angaben wie etwa Abstand, Größe und/oder Position der Empfängeroptik und dergleichen in die Auslegung berücksichtigt werden.

Ausführungsbeispiele ermöglichen dabei, einen Kommunikationsknoten ohne Kollimatorlinse in einem optischen Pfad ausgehend vom optischen Transmitter 16 auszuformen.

In anderen Worten, da die Separationsoptik eine höhere optische Sendeleistung ermöglicht, können unterschiedliche Realisierungen neu implementiert werden. Allen gleich ist, dass sie das Signal 18 mehrerer Strahlbündel untergliedern und in Form der Teilstrahlen $18_i$ in das Sichtfeld lenken. Dazu besteht mindestens eine der Oberflächen aus N x M Optikelementen, wobei jedes Optikelement eine Zusammenfügung mehrerer optischer Teilflächen sein kann und für die verwendeten Indices i, j gelten kann, dass i $\in$ [1; N] und j $\in$ [1; M]). Jedes Optikelement kann hier eine Freiform sein. Ein jedes Strahlbündel überstreicht dabei einen Teil über das gesamte Gesichtsfeld. Für alle Ausführungen ist es auch denkbar, dass die Separationsoptik 22 nicht in der Mitte, d. h. auf der optischen Achse bezogen auf den Transmitter 16 platziert wird, sondern auch daneben. Wird die Separationsoptik 22 auf der Achse platziert, ergibt sich eine doppelte Axialsymmetrie für die Mehrwegeoptik, falls das Sichtfeld und das Emissionsprofil des Transmitters 16 ebenfalls symmetrisch ist. Wird die Separationsoptik 22 neben der Achse platziert, so entfällt mindestens eine dieser Symmetrieachsen, auch wenn das Sichtfeld symmetrisch ist.

In Ausführungsbeispielen kann die Separationsoptik/Separationsoptik auf Brechung basieren, wie es beispielsweise in den Fig. 3a und 3b dargestellt ist. Fig. 3a zeigt ein System, bei dem die erste Oberfläche 52 planar ausgeführt ist und die zweite Fläche aus den Optikelementen $42_{i,j}$ besteht oder diese zumindest umfasst. Das modulierte, optische Signal 18, welches vom Transmitter ausgesendet wird, kann in mehrere Strahlbündel $48_{i,j}$ untergliedert werden. Diese treffen zunächst auf die erste Oberfläche 52 der Optik $22_1$. Jedes der Strahlbündel $48_{i,j}$ trifft auf ein anders geformtes Flächenelement $42_{i,j}$ der Optik $22_1$ und wird demnach anders gebrochen, und zwar genauso, dass die Strahlbündel $18_i$ bzw. $18_{i,j}$ das gesamte oder ein Teil des Sichtfelds abdecken.

Die Konfiguration eines Kommunikationsknotens $30_2$ gemäß Fig. 3b zeigt beispielhaft, dass die erste Oberfläche 52' der Optik $22_2$ auch anders ausgeführt sein kann, beispielsweise als sphärische Fläche, asphärische Fläche oder auch als Freiform, um beispielsweise das Linsenvolumen zu verringern. Alternativ oder zusätzlich ist es möglich, eine Toleranz- oder Laufzeitdifferenzkompensation zu erreichen. Das System gemäß Fig. 3b funktioniert ansonsten analog zum System aus Fig. 3a. Die Strahlbündel $48_{i,j}$ treffen auf unterschiedliche Oberflächenelemente $42_{i,j}$, welche die Strahlen $18_{i,j}$ so in das Sichtfeld lenken, dass sich die antizipierte Bestrahlungsstärke ergibt. Insofern zeigen die Fig. 3a und 3b schematische Darstellungen beispielhafter Ausführungen der Separationsoptik basierend auf Brechung. Alle Elemente können dabei als dreidimensionale Körper verstanden werden, welche im Allgemeinen nicht rotationssymmetrisch sind.

Anhand der Fig. 3a und 3b wird ein weiteres vorteilhaftes Ausführungsbeispiel erläutert, wobei darauf hingewiesen wird, dass diese Ausführungen und Merkmale ohne Weiteres auf andere Ausführungsbeispiele angewendet werden können, insbesondere brechende, reflektierende Separationsoptiken oder totalreflektierende Separationsoptiken.

Aufgrund von unterschiedlichen Materialen des umgebenden Mediums und eines Materials der Separationsoptiken können unterschiedliche Ausbreitungsgeschwindigkeiten, Lichtgeschwindigkeiten, des optischen Signals 18 bzw. der Teilsignale 18a-c innerhalb der Separationsoptik $22_1$ oder $22_2$ verglichen mit dem äußeren Medium auftreten. Eine voneinander verschiedene Weglänge der optischer Pfade der Teilsignale 18a-c zur und durch die Separationsoptik $22_1$ bzw. $22_2$ kann somit zu Laufzeitunterschieden oder Phasenverschiebungen zwischen den Teilsignalen 18a-c führen. Anders ausgedrückt: da die Teilsignale 18a-c in einem derartigen Fall einen von geringfügig einander verschiedenen Weg bzw. unterschiedliche Weglängen zum Empfänger zurückgelegt haben, etwa da sie alle auf einen anderen Teil/Bereich der der Separationsoptik treffen, ergeben sich Laufzeitunterschiede durch den optischen Kanal.

Diese Effekte können zur Kompensation unterschiedlicher Weglängen der Strahlen außerhalb des Mediums genutzt werden. Für hierin beschriebene Kommunikationsknoten kann dies ohne relevante nachteilige Effekte bleiben, da die Laufzeitdifferenz gering bezogen auf die Symboldauer der modulierten Daten sein kann. Beispielsweise kann bei einer Datenrate von bspw. ab 10Gbit/s (On-Off-Keying - OOK) der Effekt deutlich zu Tage treten, so dass eine Beachtung dessen erhebliche Vorteile bringt. Bspw. können die Laufzeitunterschiede an der Separationsoptik durch die Dicke der Optik ausgeglichen werden (in der Mitte bspw. dicker als am Rand, so in etwa in Fig.3a dargestellt). Beispielhaft erläutern die folgenden Berechnungen diesen Effekt:

- Eine Baudrate von 1 Gibt/s, kann bei OOK eine Bit-Dauer von 1ns bedeuten. Bei zugrunde legen eines tolerablen Jitters von 10 % kann dies bedeuten: 1/10*1 ns = 0.1 ns. Bei einer angenommenen Lichtgeschwindigkeit im Übertragungsmedium, beispielsweise Luft, von c~30 cm/ns kann dies eine tolerable Wegdifferenz von max. 3 cm bedeuten.

- Bei einer Baudrate von 10 Gibt/s, ergibt sich damit bei OOK eine Bit-Dauer von 0.1 ns. Der unveränderte Jitter von 10 % führt zu einem zeitlichen Versatz 1/10*0.1 ns = 0.01ns, was bei c~30 cm/ns eine Wegdifferenz von max. 3 mm bedeutet. Dies kann schnell erreicht werden, etwa wenn die Linse bspw. einen Durchmesser von 25 mm hat, so dass hier die erläuterten Ausführungsbeispiele Abhilfe schaffen können.
- Es ist alternativ oder zusätzlich vorgesehen, zumindest einen Teil der Wegdifferenz durch ein zur brechenden Optik zusätzliches optisches Element auszugleichen, welches die Verzögerung bewirkt. Dies ermöglicht eine einfachere Ausgestaltung der Separationsoptik unter Inkaufnahme einer zusätzlichen Komponente

In Abhängigkeit der Datenrate und der räumlichen Ausdehnung der Separationsoptik 22 könnten sich somit relevante oder kritische Laufzeitdifferenzen ergeben. Ausführungsbeispiele sehen deshalb vor, diese Laufzeitunterschiede bei der Auslegung der Separationsoptik zu kompensieren.

Die Laufzeitdifferenz lässt sich in zwei Anteile aufgliedern:
Ein erster Anteil ergibt sich innerhalb des Kommunikationsknotens 10 und/oder 20, da zentrale Strahlbündel etwa das Strahlenbündel $48_{2,1}$ einen kürzeren Weg zurücklegen als jene, die auf den Rand der Separationsoptik $22_i$ treffen, etwa die Strahlen der Strahlenbündel $48_{1,1}$ oder $48_{3,1}$. Dieser Anteil kann von der relativen räumlichen Anordnung zwischen Transmitter 10/20 und Empfänger 25 zumindest in großen Teilen unabhängig sein.

Gemäß Ausführungsbeispielen ist die Separationsoptik $22_i$ ausgebildet, um einen Laufzeitunterschied von Strahlenbündeln 48 zwischen dem optischen Transmitter 16 und der Separationsoptik $22_i$ durch unterschiedliche Laufzeiten innerhalb der Separationsoptik $22_i$ zumindest teilweise zu kompensieren. Der erste Anteil der Laufzeitdifferenz kann reduziert werden, indem die unterschiedliche Ausbreitungsgeschwindigkeit von elektromagnetischer Strahlung in unterschiedlichen Medien genutzt wird. Da zentrale Strahlen den geringsten Weg aufweisen, sehen manche Ausführungsbeispiele vor, die Separationsoptik dort so zu entwerfen oder auszulegen, dass diese Strahlen den längsten Weg durch das Optikmaterial zurücklegen, um deren Laufzeit innerhalb der Separationsoptik $22_i$ zu verlängern. Gemäß Ausführungsbeispielen weist die Separationsoptik in einem zentralen Bereich der Separationsoptik einen verglichen mit äußeren Bereichen der Separationsoptik dickere Ausgestaltung auf, um eine vergleichsweise größere Laufzeitverschiebung bereitzustellen, so dass innerhalb der Teilbereiche 42 und/oder über die Separationsoptik hinweg ein Laufzeitunterschied gering ist, etwa mit einer Abweichung von höchstens 50 %, höchstens 20 % oder höchstens 10 %. Wird die Laufzeitdifferenz für ein OOK Signal kann es vorteilhaft sein, eine geringe Abweichung oder relative Differenz zu implementieren, etwa max. 20 %, max.15 % oder max. 10 % oder weniger, um Übertragungsfehler zu vermeiden.. Bei Verwendung anderer Modulationsarten, etwa mit mehreren Frequenzträgern kann widerstandsfähigere Systeme bereitstellen, die demgegenüber größere Toleranzen der Laufzeitunterschiede erlauben. Alternativ oder zusätzlich kann der Laufzeitunterschied der Strahlenbündel 48 auch ganz oder teilweise durch unterschiedliche Materialien kompensiert werden, die in unterschiedlichen Bereichen der Separationsoptik verwendet werden.

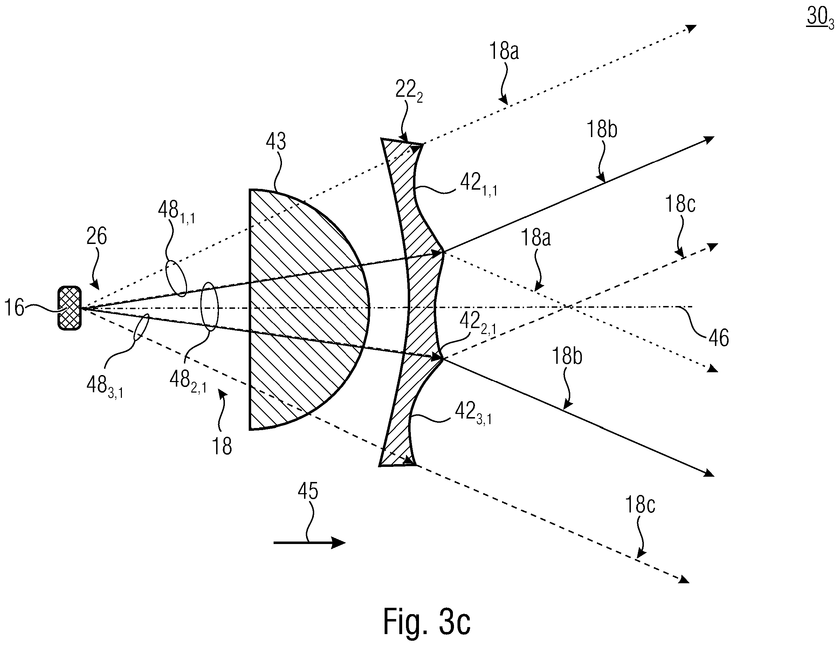

Fig. 3c zeigt eine schematische Seitenschnittansicht eines Kommunikationsknotens $30_3$, der ein Element 43 zur Laufzeitdifferenzkompensation aufweist. Das Element 43 kann in Abhängigkeit einer Wellenlänge des optischen Signals, einer Länge des Weges eines oder mehrerer Strahlenbündel 48 bzw. deren Differenzen dimensioniert sein, so dass eine Laufzeitverzögerung ortsabhängig und variabel über einen Verlauf des Elements 43 sein kann. Bspw. kann hierfür bei einer sphärischen Ausbreitung der Strahlenbündel 48 ein sphärischer Körper vorgesehen sein, etwa eine Halbkugel oder Ähnliches. Alternativ kann aber auch eine Auslegung für Teile der Strahlenbündel $48_{i,j}$ erfolgen, wie es im Zusammenhang mit der Auslegung der Teilflächen $42_{i,j}$ beschrieben ist, das bedeutet, das Element 43 kann eine diskontinuierliche Oberfläche aufweisen. Die Abmessung des Elements 43 entlang einer Richtung 45, etwa entlang einer Strahlhauptausbreitungsrichtung, kann auch basierend auf einer Abmessung der Separationsoptik $22_2$ erfolgen, so dass bspw. kombinatorisch aus dem Durchlaufen des Elements 43 und der Separationsoptik $22_2$ oder einer anderen Separationsoptik die angestrebte Laufzeitkompensation erhalten wird. Hieraus ergibt sich auch, dass die Kompensation ohne das Element 43 durch entsprechende Auslegung der Separationsoptik erfolgen kann, was bspw. in Richtung eines Körpers gemäß Fig. 3a führen kann. Das bedeutet, das Element 43 kann angeordnet sein, um den Laufzeitunterschied von Strahlenbündeln 48 zwischen dem optischen Transmitter 16 und der Separationsoptik durch unterschiedliche Laufzeiten innerhalb des Elements 43 zumindest teilweise zu kompensieren. Das Element kann auch als mehrere Teilelemente ausgeführt sein, die kombinatorisch die gewünschte Laufzeitkorrektur bereitstellen. Obwohl das Element 43 so dargestellt ist, dass es zwischen der Separationsoptik $22_2$ und dem Transmitter 16 angeordnet ist, kann das Element 43 alternativ oder zusätzlich ganz oder teilweise so angeordnet sein, dass die Separationsoptik $22_2$ zwischen dem Element 43 und dem Transmitter 16 angeordnet ist. Das beschriebene Konzept ist auf andere Kommunikationsknoten ohne weiteres übertragbar.

Ausführungsbeispiele sehen ferner vor, die Kompensation des Laufzeitunterschieds ganz oder teilwiese am Empfänger vorzunehmen, etwa durch Anpassen der Empfängeroptik und/oder durch Einsatz eines Elements 43. Hierfür ist eine abbildende Ausführung der Empfängeroptik notwendig, sodass die einzelnen Teilsignale $18_i$ wieder aufgetrennt werden.

Der zweite Anteil der Laufzeit betrifft die Teilsignale $18_i$ mit i = a, b, c und kann mit der konkreten Anordnung des Empfängers 25 in Bezug auf den Transmitter 20 variieren. Die Laufzeitdifferenz kann bspw. bei einer Anordnung des Empfängers an einem Rand des Sichtfeldes des Senders am größten sein, d.h. bei maximalen Versatz von Empfänger 25 in Bezug auf den Transmitter 20, da Strahlen von einem ersten Rand der Separationsoptik 22 zum Empfänger den kürzesten und jene Strahlen vom gengenüberliegenden zweiten Rand der Separationsoptik 22 einen längeren oder längsten Weg aufweisen. Dieser zweite Anteil kann gemäß Ausführungsbeispielen reduziert werden, indem die optischen Teilsignale $18_i$ so erzeugt werden, dass sie jeweils nur einen Teil des Sichtfeldes ausleuchten. In dieser Konfiguration kann erreicht werden, dass am Rand des Sichtfeldes nicht alle Teilsignale $18i$ auftreffen und die maximale Laufzeitdifferenz zwischen den am Ort des Empfängers eintreffenden Teilsignalen reduziert werden kann.

Beide Anteile können auch reduziert werden, in dem die Abmessung der Separationsoptik 22 in Bezug auf die maximal zulässige Laufzeitdifferenz reduziert werden. Die maximale zulässige Laufzeitdifferenz kann aus der Modulationsart und der Datenrate resultieren. Für eine OOK-moduliertes Signal mit einer Baudrate von 10 Gbit/s könnte die maximale zulässige Laufzeitdifferenz 3 mm sein. Ein einfaches Zahlenbeispiel, welches die Längenverhältnisse an rechtwinkligen Dreiecken nutzt, soll exemplarisch die Größenordnung vermitteln:

- Ein Emissionswinkel von 20°, bei einem Linsenabstand von 100 mm führt zu einem Linsendurchmesser von 72 mm und, bei vernachlässigbarer Linsendicke und ohne Laufzeitkompensation, zu einer Wegdifferenz von 6,4 mm. Durch Reduktion auf 30 mm Abstand reduziert sich der Linsendurchmesser auf etwa 22 mm und die Wegdifferent auf nur noch 1,9 mm.

Es kann ein Kompromiss zwischen Signalqualität (in Bezug auf die Laufzeitdifferenz) und Augensicherheit getroffen werden, da eine Verkleinerung der Separationsoptik bspw. zu einer Erhöhung einer räumlichen Dichte der Fokuspunkte führen kann. Unter Verweis auf das Kommunikationssystem 200 oder 200' kann der Empfänger so ausgelegt und eingerichtet werden, dass an einem Ort des Empfängers 25 bzw. dessen Empfangsoptik 24, ggf. auch an jedem Ort des Sichtfeldes ein Laufzeitunterschied zwischen eintreffenden Teilsignale $18_i$ gering ist, etwa mit einer Abweichung von höchstens 50 %, höchstens 20 % oder höchstens 10 % oder weniger, wie es oben erläutert ist.

Maßnahmen zur Reduzierung des ersten Anteils und zur Reduzierung des zweiten Anteils der Laufzeitunterschiede können einzeln oder in Kombination eingesetzt werden. Ein Einsatz eines zusätzlichen Elements 43 aber auch kombinatorisch mit der Separationsoptik kann unter Verwendung geeigneter Materialien erfolgen, wobei gewöhnliche Materialien bevorzugt sind. Es kann bspw. ein gewöhnliches Kunststoffglas (etwa PMMA, Polycarbonat, ...; mit Brechungszahlen n von bspw. 1,4 < n < 1,8 verwendet werden). Alternativ oder zusätzlich kann mineralisches Glass (etwa BK-7, ..., mit Brechungszahlen von bspw. 1,4 < n < 1,8) verwendet werden. Falls ein transmittives Element eingesetzt wird, kann es eine geringe Absorption aufweisen; falls das Element 43 und/oder die Separationsoptik reflektiv wirkt, kann es bevorzugt einen hohen Reflexionsgrad aufweisen.

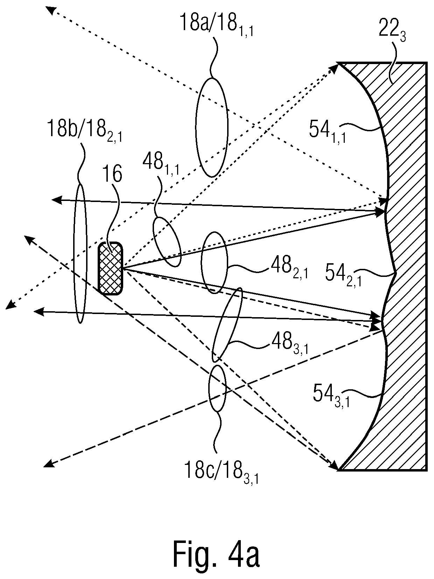

Fig. 4a zeigt eine schematische Seitenschnittansicht eines Teils eines Kommunikationsknotens gemäß einem Ausführungsbeispiel mit einer Separationsoptik $22_3$, die gegenüber den Separationsoptiken aus Fig. 1, Fig. 2a, Fig. 2b, Fig. 3a und Fig. 3b zumindest teilweise reflektiv bzw. reflektierend oder totalreflektierend gebildet ist. Optisch wirksame Oberflächen $54_{i,j}$ können basierend auf denselben oder komplementären Überlegungen oder Auslegungen entworfen und gèformt sein, wobei anstelle von brechenden Eigenschaften die reflektierenden Eigenschaften der optisch wirksamen Oberflächen 54 genutzt werden können. Ausführungsbeispiele sehen vor, optisch brechende und optisch reflektierende oder totalreflektierende Oberflächen in einer Separationsoptik zu kombinieren. So kann zumindest eine der optisch wirksamen Oberflächen reflektierend oder totalreflektierend gebildet sein und/oder zumindest eine der optisch wirksamen Oberflächen brechend ausgeführt sein. In einer Konfiguration, bei der die Separationsoptik zumindest eine reflektierende oder totalreflektierende Oberfläche aufweist, kann der optische Transmitter 16 ausgebildet sein, um das optische Signal 18 in Richtung der Separationsoptik $22_3$ auszusenden. Die Separationsoptik $22_3$ kann ausgebildet sein, um die Mehrzahl von optischen Teilsignalen zu reflektieren bzw. im Zuge einer Reflexion zu erzeugen. Effekte einer reduzierten Leistung des optischen Signals am Empfänger, die durch eine Abschattung durch den optischen Transmitter 16 erhalten werden können, können durch geeignete Wahl einer Form und/oder Position des optischen Transmitters 16 zumindest abgeschwächt werden. In der in Fig. 4a dargestellten Konfiguration ist der optische Transmitter 16 der Separationsoptik $22_3$ gegenüberliegend angeordnet und die Separationsoptik $22_3$ kann als Reflektor genutzt werden.

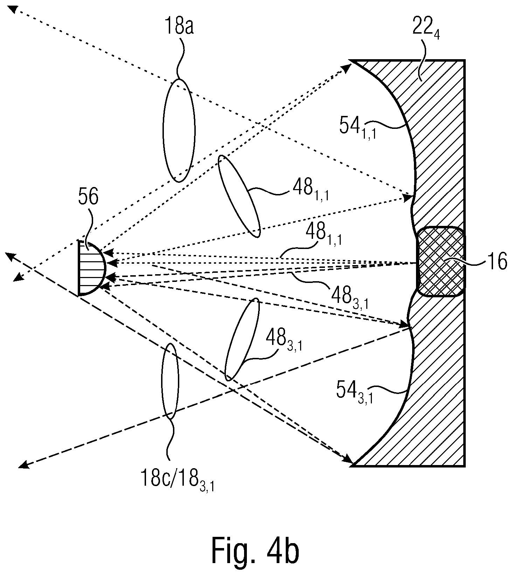

Fig. 4b zeigt eine schematische Seitenschnittansicht eines Teils eines Kommunikationsknotens gemäß einem Ausführungsbeispiel, bei dem eine Separationsoptik $22_4$ ebenfalls eine, mehrere oder alle optisch wirksamen Oberflächen 54 umfasst, die als reflektierende oder totalreflektierende Oberflächen gebildet sein können. Anders als in Fig. 4a kann der optische Transmitter 16 in einer Ebene der Separationsoptik $22_4$ angeordnet sein. Ein Subreflektor 56 kann angeordnet sein, um das optische Signal 18 zu empfangen und auf die Separationsoptik $22_4$ mittels Reflexion zurückzuwerfen. Es kann vorgesehen sein, einen Bereich, in dem der optische Transmitter 16 in der Ebene der Separationsoptik $22_4$ angeordnet ist, von einer Aufteilung in die optischen Teilstrahlen auszunehmen, so dass beispielsweise eine der optisch wirksamen Oberflächen der Separationsoptik $22_3$ einer vergleichsweisen Konfiguration für die Funktion der Emission des optischen Signals genutzt würde. Es ist jedoch ebenfalls möglich, teildurchlässige Oberflächen zu verwenden und eine davon als optisch wirksame Oberfläche zwischen dem optischen Transmitter 16 und dem Subreflektor 56 vorzusehen, so dass die von dem Subreflektor 56 zurückgeworfene Strahlung im Bereich des optischen Transmitters 16 analog zu einer optisch wirksamen Oberfläche $54_{1,1}$ oder $54_{3,1}$ ebenfalls gebrochen wird. Ebenso kann eine Oberfläche des Subreflektors 56 so ausgelegt werden, dass eine Aufteilung in die Strahlbündel zumindest teilweise an diesem Ort erfolgt.

Da Subreflektoren 56 möglicherweise örtlich kleiner geformt oder gebildet werden können als der optische Transmitter 16, kann ein Effekt der Abschattung durch Verwendung eines Subreflektors 56 vermindert werden. Während in der Konfiguration gemäß Fig. 4a der Transmitter 16 ausgebildet ist, um das optische Signal unmittelbar in Richtung der Separationsoptik $22_3$ auszusenden, ist der Transmitter 16 in der Konfiguration gemäß Fig. 4b ausgebildet, um das optische Signal mittelbar, mittels des Subreflektors 56, in Richtung der Separationsoptik $22_4$ auszusenden. Die Separationsoptiken $22_3$ und $22_4$ sind ausgebildet, um die Mehrzahl der optischen Teilsignale $18_i$ zu reflektieren.

In anderen Worten kann die Separationsoptik auch auf Reflexion basieren, wie es in den Fig. 4a und 4b dargestellt ist. Die Konfiguration gemäß Fig. 4a zeigt ein System, bei dem die Separationsoptik komplett reflektiv in Bezug auf die Kommunikationswellenlänge ausgeführt ist. Das von Transmitter 16 emittierte, modulierte Signal 18 kann analog zu den brechenden Optiken in mehrere Strahlbündel $48_{i,j}$ separiert werden. Jedes Strahlbündel $48_{i,j}$ trifft auf ein anders geformtes Flächenelement $5_{i,j}$ der Optik $22_3$ und wird demnach anders reflektiert und zwar genauso, dass die Strahlbündel $18_{i,j}$ das gesamte oder ein Teil des Sichtfelds abdecken. Eine Summe der Strahlbündel $48_{i,j}$ entspricht dabei dem Strahlbündel 26.

In dem dargestellten System der Fig. 4a sind die Oberflächenelemente $54_{i,j}$ so ausgeführt, dass die Randstrahlen eines jeden Elements sich kreuzen. Die Oberfläche kann aber auch so geformt sein, dass sie sich nicht kreuzen, wobei für unterschiedliche Kombinationen von optisch wirksamen Oberflächen andere Lösungen möglich sind. Ein Nachteil kann dadurch entstehen, dass der Transmitter 16 einen Teil der Strahlen $18_{i,j}$ blockiert. Um diesen Effekt zu verringern, kann der zentrale Teil, beispielsweise die optisch wirksame Oberfläche $54_{2,1}$, entsprechend geformt sein, etwa indem ein geringes Maß an Lichtleistung in den blockierten Bereich gelenkt wird. Darüber hinaus kann der Abschattungseffekt weiter minimiert werden, etwa durch die Ausführung gemäß Fig. 4b. Fig. 4b zeigt ein System, bei dem die Separationsoptik $22_4$ reflektiv in Bezug auf die Kommunikationswellenlänge ausgeführt ist. Der Transmitter 16 emittiert das modulierte Signal 18 in Kommunikationsrichtung. Vor ihm befindet sich ein Reflektor 56, der die Teilstrahlen $48_{i,j}$ in Form der Strahlbündel $18_{i,j}$ zurückwirft. Die Oberflächenelemente der Optik formen das Sichtfeld in Form der Strahlen, die von der Separationsoptik $22_4$ zurückgeworfen werden. Die Fig. 4a und 4b zeigen insofern schematische Darstellungen beispielhafter Ausführungen der Separationsoptik unter Verwendung von Reflexion. Alle Elemente verstehen sich als dreidimensionale Körper, welche im Allgemeinen nicht rotationssymmetrisch sind.

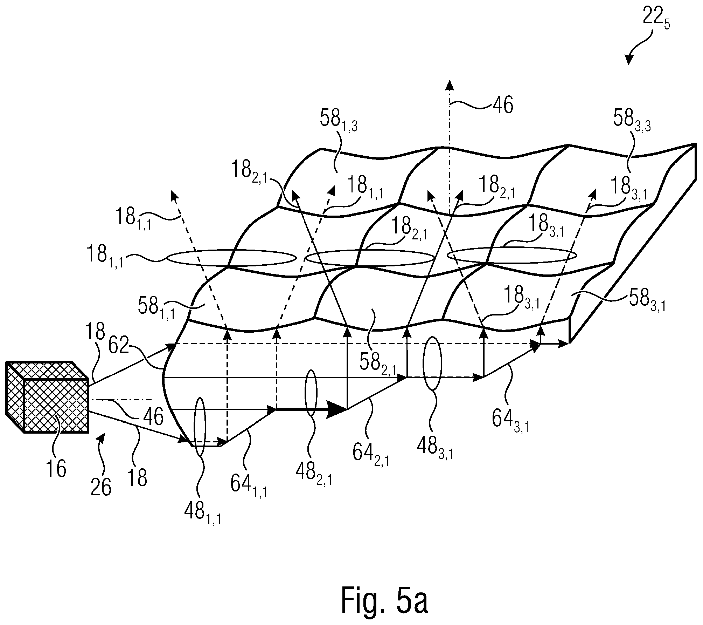

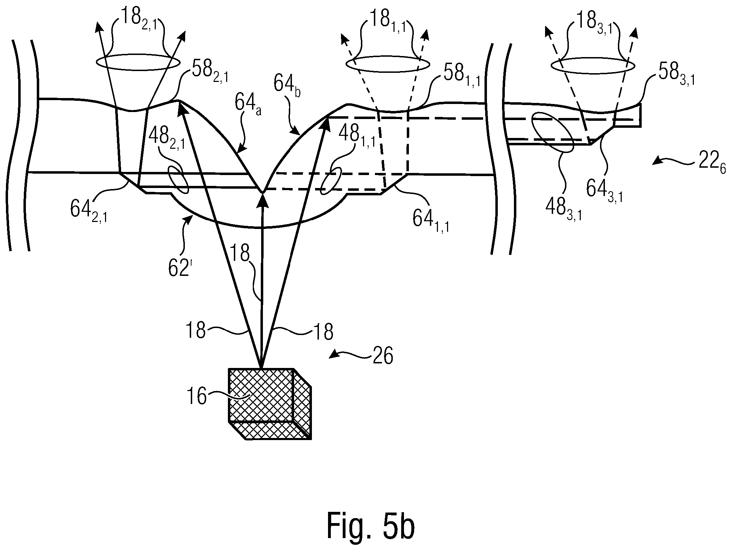

Während die Konfigurationen gemäß Fig. 4a und 4b auf Reflexion basieren, können in den Konfigurationen gemäß Fig. 5a und 5b auch totalreflektierende Oberflächen eingesetzt werden. Wie es für die vorangehende Separationsoptik beschrieben ist, kann auch hier eine Separationsoptik eine Mehrzahl von optisch wirksamen Oberflächen aufweisen, von denen jede einem der optischen Teilsignale zugeordnet ist. Ebenso kann jede der optisch wirksamen Oberflächen ein individuelle Geometrie und/oder eine individuelle Flächengröße aufweisen, die an eine Relativposition zwischen der optisch wirksamen Oberfläche und dem optischen Transmitter 16 angepasst ist. Die unterschiedlichen optisch wirksamen Oberflächen hierin beschriebener Separationsoptiken können eine unterschiedliche Größe und/oder ein unterschiedliches Aspektverhältnis ihrer Seiten der optisch wirksamen Oberfläche aufweisen.

Zumindest eine der optisch wirksamen Oberflächen hierin beschriebener Separationsoptiken kann so gebildet sein, dass sie keine Symmetrie aufweist. Diese symmetriefreie Ausgestaltung ermöglicht es, eine hochgenaue Anpassung der Separationsoptik an das Emissionsprofil des Transmitters 16, den Übertragungsweg und/oder die Empfängeroptik vorzunehmen.

Fig. 5a zeigt eine schnittperspektivische Ansicht eines optischen Transmitters 16 zusammen mit einer Separationsoptik $22_5$ gemäß einem Ausführungsbeispiel. Die Separationsoptik $22_5$ weist ein NxM-Feld optisch wirksamer Oberflächen $58_{i,j}$ auf, wobei beispielhaft N und M zu 3 gewählt sind. Die Separationsoptik $22_5$ weist eine laterale Oberfläche 62 auf, die ausgelegt ist, um das optische Signal 18 zu empfangen. Eine Ausrichtung der lateralen Oberfläche 62 kann beispielsweise im Wesentlichen senkrecht sein zu einer Abstrahlrichtung, entlang der die optischen Teilsignale $18_{i,j}$ ausgesendet werden. Prinzipiell ist eine beliebige Orientierung zueinander möglich, da die Separationsoptik 22 zusätzliche reflektierende Oberflächen $64_{ij}$ aufweist, die ausgebildet sind, um die Strahlbündel $48_{i,j}$ mittels Totalreflexion umzulenken und auf die jeweils zugeordnete optisch wirksame Oberfläche $58_{i,j}$ zu lenken. Dies ermöglicht, dass sowohl die Ausrichtung des Transmitters 16 zur Separationsoptik $22_5$ als auch eine Orientierung der lateralen Oberfläche 62 sowie ein Anstellwinkel der reflektierenden Oberflächen $64_{i,j}$ bezüglich der lateralen Oberfläche 62 bzw. des später hinzuzufügenden Transmitters 16 frei wählbar und miteinander kombinatorisch auslegbar sind. Die laterale Oberfläche 62 kann dabei optisch wirksame Eigenschaften aufweisen, beispielsweise kollimierend oder dergestalt, dass die entsprechenden Teile des optischen Signals 18 auf die reflektierenden Oberflächen $64_{i,j}$ gelenkt werden.

Die optisch wirksamen Oberflächen $58_{i,j}$ können dabei so ausgebildet sein, dass sie beispielsweise eine divergente oder gar streuende Wirkung für das jeweils auftreffende Strahlbündel $48_{i,j}$ bereitstellen.

Die Separationsoptik $22_5$ ist ausgebildet, um das optische Signal 18 mittels Totalreflexion oder Reflexion an zumindest einer reflektierenden oder totalreflektierenden Oberfläche 64 in eine andere Richtung umzulenken. Jeder optisch wirksamen Oberfläche $58_{i,j}$ ist ein Teilbereich der zumindest einen reflektierenden oder totalreflektierenden Oberfläche 64 eindeutig zugeordnet. So können Separationsoptiken dergestalt ausgeformt werden, dass eine Mehrfachreflexion erfolgt. Dies als auch alternativ oder zusätzlich der Einsatz einer optisch wirksamen lateralen Oberfläche ermöglicht eine mehrfache Richtungsumlenkung durch die Separationsoptik $22_5$.

Die Separationsoptik $22_5$ kann dabei ebenfalls so geformt sein, dass die Mehrzahl von optisch wirksamen Oberflächen $58_{i,j}$ so geformt ist, dass sie zumindest im Hinblick auf ein anderes Flächenelement eine voneinander verschiedene Flächengröße und/oder ein unterschiedliches Aspektverhältnis aufweisen. So kann beispielsweise eine Auslegung dergestalt getroffen werden, dass eine Flächengröße mit einem Abstand zu einer optischen Achse des optischen Transmitters 16 zunimmt. Die optische Achse des Transmitters 16 kann vereinfacht ebenfalls als reflektiert oder umgelenkt angenommen werden, so dass sie beispielsweise in einem zentralen Flächenelement der Separationsoptik $22_5$ verlaufen kann, etwa indem der Mittelpunkte 44 aus Fig. 3a durch dieses Flächenelement verläuft.

Diese Auslegung kann der Gedanke zugrunde liegen, dass eine Strahlungsleistung des optischen Transmitters 16 nahe der optischen Achse hoch ist und zu Randbereichen hin abfällt. Durch eine zunehmende Flächengröße bei zunehmendem Abstand zur optischen Achse kann somit dennoch sichergestellt werden, dass durch jedes Flächenelement $58_{i,j}$ ein zumindest innerhalb von Toleranzbereichen gleicher Anteil der Strahlenleistung des Transmitters 16 verläuft. Der Transmitter 16 kann beispielsweise ausgebildet sein, um in einem Bereich, der die optische Ache 46 umfasst, ein Intensitätsmaximum in dem optischen Signal 18 bereitzustellen. Hierin beschriebene Separationsoptiken mit voneinander verschiedenen Flächengrößen können ausgebildet sein, um basierend auf der unterschiedlichen Flächengröße eine optische Leistung je optisch wirksamer Oberfläche bereitzustellen, die innerhalb eines Toleranzbereichs von 50%, bevorzugt 30% und weiter bevorzugt 10% gleich ist.

Fig. 5b zeigt eine schematische Seitenschnittansicht einer Separationsoptik $22_6$ gemäß einem Ausführungsbeispiel, die ebenso wie die Separationsoptik $22_5$ im Kommunikationsknoten gemäß hierin beschriebener Ausführungsbeispiele eingesetzt werden kann.

Das optische Signal 18 kann mittels einer oder mehrerer reflektierender Oberflächen 64a und/oder 64b umgelenkt werden, wobei aus diesem reflektierten Licht an örtlich unterschiedlichen Bereichen mittels reflektierender Oberflächen $64_{i,j}$ wieder eine Umlenkung zu den jeweiligen optisch wirksame Oberfläche $58_{i,j}$ bewirkt werden kann, wobei zumindest eine oder eine Gruppe von reflektierenden Oberflächen $64_{ij}$ einer anderen reflektierenden Oberflächen 64a oder 64b zugeordnet sein kann und jede der optisch wirksamen Oberflächen $58_{i,j}$ einer reflektierenden Oberfläche $64_{i,j}$ zugeordnet sein kann. Ebenso kann jede der reflektierenden Oberflächen $64_{i,j}$ einem Teilflächenbereich der Oberflächen 64a oder 64b zugeordnet sein, was es insbesondere durch eine Kollimation bzw. parallele Strahlführung des optischen Signals im Bereich zwischen den Flächen 64a bzw. 64b und den zugeordneten reflektierenden Flächen $64_{i,j}$ ermöglicht, eine Art Stufenprofil vorzusehen, bei der mittels einer Stufe im Bereich der reflektierenden Oberfläche $64_{ij}$ ein Teil des Signals ausgekoppelt wird. Hierdurch ist eine besonders effiziente flächige Verteilung des Lichtsignals möglich. Der Begriff "Stufe" ist dabei jedoch nicht auf rechte Winkel beschränkt, sondern kann einen beliebigen Anstellwinkel aufweisen, beispielsweise 45° ± 30°, ± 20° oder ± 10° in Bezug auf das Eintreffen der Signale. Mittels der Doppelreflexion kann eine veränderte Relativposition des Transmitters 16 bezogen auf die Separationsoptik 22 erhalten werden, wenn ein Vergleich zwischen den Separationsoptiken $22_5$ und $22_6$ angestellt wird.

In anderen Worten kann die Separationsoptik Totalreflexion einsetzen, wie in den Fig. 5a und 5b dargestellt. In Fig. 5a ist dargestellt, dass eine Separationsoptik $22_5$ mittels Brechung an der lateralen Oberfläche 62 zunächst das von dem Transmitter 16 emittierte, modulierte Signal 18 kollimiert. Die kollimierten Strahlbündel sind mit $48_{i,j}$ bezeichnet. Diese Strahlbündel werden an den entsprechenden Flächen $64_{i,j}$ in Richtung der Kommunikation gelenkt. Beim Verlassen der Optik bzw. Separationsoptik $22_5$ werden die Strahlen an den Freiformflächen $58_{i,j}$ so gebrochen, dass sich das antizipierte Sichtfeld mit der antizipierten Bestrahlungsstärke ergibt. Diese Ausgangsstrahlen sind mit $18_{i,j}$ bezeichnet. Demgegenüber ist die in Fig. 5b gezeigte Konfiguration zwar ähnlich wie die Konfiguration wie in Fig. 5a, das modulierte Signal 18 kann hier aber durch die totalreflektierenden Flächen 64a und 64b der Separationsoptik $22_6$ kollimiert werden. Die Eingangsfläche 62' kann optisch inaktiv sein oder zur Strahlformung beitragen. Die kollirnierten Teilstrahlen, die die Oberflächen 64a oder 64b verlassen und mit $48_{i,j}$ bezeichnet werden, können durch die Flächen $64_{ij}$ in Kommunikationsrichtung gelenkt und an den Flächenelementen $58_{i,j}$ so gebrochen werden, dass das antizipierte Sichtfeld mit der entsprechenden Bestrahlungsstärke erzeugt wird. Die Ausgangsstrahlen sind mit $18_{i,j}$ bezeichnet. Das bedeutet, Fig. 5a und 5b zeigen schematische Darstellungen beispielhafter Ausführungsformen der Separationsoptik unter anderem unter Nutzung von Totalreflexion. Alle Elemente verstehen sich als dreidimensionale Körper, welche im Allgemeinen nicht rotationssymmetrisch sind.

Die Konfiguration gemäß Fig. 5b verdeutlicht auch, dass die Austrittsfläche der Separationsoptik nicht vollständig oder komplett von den Freiformoberflächenelementen $58_{i,j}$ ausgefüllt sein muss. Es ist auch möglich, die entsprechenden Oberflächenelemente weiter über die Ausgangsfläche zu verteilen. Dies ermöglicht optisch anders genutzte oder optisch inaktive Zwischenbereiche zwischen den Teilbereichen. Die Separationsoptik wird dadurch zwar größer, gleichzeitig erhöht sich aber auch die Ausdehnung der scheinbaren Quelle, d. h. die Beabstandung der Brennpunkte der einzelnen Teilstrahlen bei gemeinsamer Fokussierung, so dass der Grenzwert für die emittierbare Leistung durch den Transmitter im Lichte der Augensicherheit steigt.

Hierin beschriebene Aspekte beziehen sich auf ein Konzept mit einem Transmitter, der aus einem Modulator, Emitter und einer Separationsoptik besteht oder diese umfasst. Letzteres zeichnet sich dadurch aus, dass das optische, modulierte Signal in Teilstrahlen aufgetrennt wird, von denen jedem Strahlbündel ein Teil der Separationsoptik zugeordnet ist. Dieser Optikteil überführt jedes Strahlbündel in das gewünschte Ausgangsstrahlprofil durch Brechung, Reflexion und/oder Totalreflexion, mit dem Ziel, die scheinbare Ausdehnung der Quelle und eventuell zusätzlich den Ausgangsquerschnitt zu erhöhen, um so den Grenzwert für die zulässige Strahlung nach DIN EN 60825-1:2015-07 zu erhöhen.

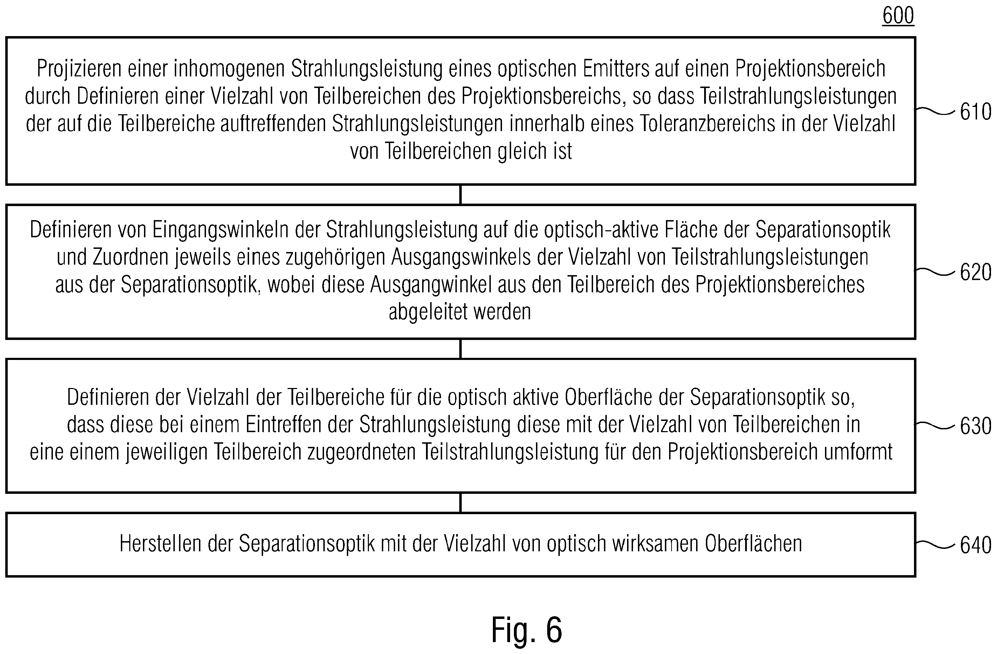

Fig. 6 zeigt ein schematisches Ablaufdiagramm eines Verfahrens 600 zum Bereitstellen einer Separationsoptik in Übereinstimmung mit hierin beschriebenen Ausführungsbeispielen. Eine derartige Separationsoptik kann für einen optisch-drahtlosen Kommunikationsknoten verwendet werden und mit einer Mehrzahl oder Vielzahl von optisch aktiven Oberflächen ausgestattet sein. Für jede der optisch aktiven Oberflächen, etwa die Oberflächen $42_{i,j}$, $54_{i,j}$ und/oder $58_{i,j}$ können die folgenden Schritte ausgeführt werden. In einem Schritt 610 erfolgt ein Projizieren einer inhomogenen Strahlungsleistung eines optischen Emitters auf einen Projektionsbereich durch Definieren einer Vielzahl von Teilbereichen des Projektionsbereichs, so dass Teilstrahlungsleistungen der auf den Teilbereich auftreffenden Strahlungsleistung innerhalb eines Toleranzbereichs in der Vielzahl von Teilbereichen gleich ist. Das bedeutet, die räumliche Verteilung der Strahlungsleistung kann in Teilbereiche aufgeteilt werden, deren Flächenintegral bezüglich der Strahlungsleistung innerhalb des Toleranzbereichs gleich ist.

In einem Schritt 620 erfolgt ein Definieren von Eingangswinkeln der Strahlungsleistung auf die optisch-aktive Fläche der Separationsoptik und Zuordnen jeweils eines zugehörigen Ausgangswinkels der Vielzahl von Teilstrahlungsleistungen aus der Separationsoptik, wobei diese Ausgangwinkel aus dem Teilbereich des Projektionsbereichs abgeleitet werden. Unter beispielhaftem Verweis auf die Fig. 3a und 3b kann somit beispielsweise berücksichtigt werden, in welchem Winkel das optische Signal 18 auf die Oberfläche 52 bzw. 52' trifft und in welchem Winkel das Strahlbündel ausgegeben werden soll, bzw. wie es aufgefächert werden soll.

In einem Schritt 630 erfolgt ein Definieren der Vielzahl von Teilbereichen für die Separationsoptik, das bedeutet, die Vielzahl der optisch aktiven Oberflächen, so dass diese bei einem Eintreffen der Strahlungsleistung diese mit der Vielzahl von optisch wirksamen Oberflächen in eine einem jeweiligen Teilbereich zugeordneten Teilstrahlungsleistung für den Projektionsbereich umformt. Das bedeutet, für jede der optisch aktiven Oberflächen wird eine Mehrzahl oder Vielzahl von Einzelstrahlen in einem jeweiligen Teilbündel 48 angenommen und für jeden dieser Einzelstrahlen in den Strahlbündeln wird ein eigener dedizierter Teiloberflächenbereich der optisch aktiven Fläche bestimmt, etwa mittels Computersimulation oder Berechnung. Hieraus können sich die vorerwähnten Freiformen ergeben, da hierdurch unterschiedlich geneigte, geformte, in ihrer Größe unterschiedliche oder sonstig unterschiedliche Teilflächen innerhalb eines Flächenelements erhalten werden können, die dann zu einer Oberfläche, der optisch aktiven Oberflächen $48_{i,j}$ zusammengefügt werden. Je höher eine Anzahl von angenommenen oder berücksichtigten Strahlen innerhalb eines der Strahlbündel $48_{i,j}$ desto höher die Anzahl der Teilflächenelemente.

Auch im Hinblick auf diese angenommenen Teilflächen einer einzelnen optisch aktiven Oberfläche kann die Teilstrahlung aus dem Strahlbündel gleich bzw. innerhalb eines Toleranzbereichs gleich ausgelegt werden. Anders ausgedrückt wird jede der optisch aktiven Oberflächen, die in den hierin dargestellten Figuren beschrieben ist, aus einer Mehrzahl bzw. Vielzahl von eigens hierfür ausgelegten, ausgestalteten und zu den jeweiligen optisch aktiven Oberflächen zusammengefügten Teil-Oberflächen geformt.

In einem Schritt 640 erfolgt ein Herstellen der Separationsoptik mit der Vielzahl von optisch wirksamen Oberflächen.

Die hierin beschriebenen Kommunikationsknoten können ein Sichtfeld aufweisen, das vom Anwendungsfeld abhängen kann. Das Sichtfeld kann, je nach zu überbrückender Distanz, zwischen 1° und 50°, bevorzugt zwischen 3° und 30° und besonders bevorzugt zwischen 5° und 20° bezogen auf die Blickrichtung des Kommunikationsknotens liegen. Dabei kann die Form des Sichtfelds (etwa kreisförmiger Querschnitt, rechteckiger Querschnitt oder elliptischer Querschnitt) vor und nach einer abbildenden Optik, der Separationsoptik, unterschiedlich sein.

Im Zusammenspiel mit hierin beschriebenen Ausführungsbeispielen, die darauf auszielen, eine Aufweitung der scheinbaren Quelle zu erreichen, ist es vorteilhaft, einen gewissen Abstand zwischen Emitter und Linse, d. h. zwischen den Elementen 16 und 22 zu realisieren. Ein praktischer Abstand kann beispielsweise in einem Bereich zwischen 2 mm und 200 mm liegen, bevorzugt von zumindest 5 mm und höchstens 100 mm oder von zumindest 8 mm und höchstens 50 mm. Ein größerer Abstand kann dabei (in Abhängigkeit des Abstrahlwinkels) auch zu einer größeren Linsenausdehnung führen. Letzterer wird durch die Anwendung bestimmt. Dieser kann im Sub-Millimeter-Bereich liegen, aber auch mehrere 10 Zentimeter betragen. Die Anwendung der klassischen Optik kann sich auf räumliche Größen entlang der längsten Achse bewegen, die in einem Bereich zwischen zumindest 5 mm und höchstens 55 mm liegt. Hierbei wurde jedoch lediglich auf bevorzugte oder Standard-Anwendungsfälle Bezug genommen. Ausführungsbeispiele weisen den Vorteil auf, dass eine Auslegung an beliebige Szenarien möglich ist. In den Fig. 4a und 4b kann die Augensicherheit über die Abmessung des großen Spiegels, d. h. der reflektierenden Separationsoptik, und die Anzahl der Elemente definiert werden. In den Fig. 5a und 5b kann die Augensicherheit zumindest teilweise unabhängig vom Abstand vom Laser (Element 60) zur Linse (Separationsoptik) sein, aber von der Fläche der Optik zumindest beeinflusst sein, d. h., über welche Fläche die einzelnen Oberflächen in Elemente verteilt werden. Die Ausführungsbeispiele aus Fig. 5a und 5b lassen sich so besonders flach entwerfen.

Die Anzahl der optisch aktiven Oberflächen kann einen Einfluss auf die Augensicherheit haben. Die Auslegung der Anzahl von Flächenelementen, d. h., die Selektionen der Anzahl der Elemente in N und/oder M kann dabei in Abhängigkeit von verschiedenen Parametern getroffen werden. Hierbei kann berücksichtigt werden, dass im Vergleich zu einer Ein-Wege-Optik die Separationsoptik gemäß Ausführungsbeispielen mehrere Bilder im abbildenden Versuchsaufbau der Augensicherheitsnorm erzeugt. Damit die Separationsoptik ihren Zweck besonders gut erfüllen kann, können folgende Bedingungen eingehalten werden.

o Der zulässige Grenzwert der zugänglichen Strahlung (GZS) der entsprechende Laserklasse/Lampengruppe soll sowohl für alle einzelnen Quellen, die sich auf dem Detektor abbilden, eingehalten werden. Es gilt: $P_{auge}$ = $GZS \cdot C_6$ (Erläuterungen zum C6-Wert folgen). Das trifft aber auch auf die Gesamtheit, d.h. die Einhüllende, welche alle Quellen umfasst, zu. Der Unterschied zur Ein-Wege-Optik ist:

■ Die Leistung jeder Quelle einzeln betrachtet ist geringer um den Faktor N*M, wenn man von N*M Quellen ausgeht und diese die gleiche Teilleistung aufweisen.

■ Die Einhüllende aller einzelnen Quellen weißt eine deutlich höhere Ausdehnung auf, als es das Bild einer einzelnen Quelle einer Ein-Wege-Optik aufweisen würde. In folgende dessen ist der zulässige C6 Wert und damit der Grenzwert erhöht. Dabei wird C6 einer Einzelquelle deutlich kleiner sein als der C6 der Gesamtheit.

◦ Die Anzahl der Elemente hängt von verschieden Parametern ab: Fertigungsgenauigkeit, Sichtfeldwinkel, Größe der Mehrwegeoptik:

■ Zum einen bestimmt der Sichtfeldwinkel $\theta_{FOV}$ (FOV = Field of View, Sichtfeld) und die generelle Größe der Optik (Annahme: Radius $r_{optik}$) welcher Anteil der gesamten abgestrahlten Leistung $P_{emssion}$ auf das Auge trifft. Die auf das Auge auftreffende Leistung kann mittels

$$P_{auge} = P_{emssion} \frac{A_{Auge}}{A_{FOV}(z=10cm)} = P_{emssion} \frac{\pi(7mm)^2}{(r_{optik}+10cm*\tan(\theta_{FOV}))^2 \ \pi} = \quad \text{angenähert werden,}$$

wobei hier geringe Fehler auftreten können. $A_{Auge}$ bezeichnet dabei die Fläche Puplillenfläche bei maximaler Weite und $A_{FOV}$ die Fläche des Sichtfeldes bei einem Abstand z von 10 cm.

■ Die Ausdehnung der scheinbaren Quellen beschreibt den Effekt, dass die einzelnen Quellen auf unterschiedliche Punkte der Netzhaut fokussiert werden und wird mittels C6-Parameter beschrieben. Es gilt:

$$C_6 = \frac{\alpha}{\alpha_{min}}$$ Der Faktor $\alpha$ kann dabei nur zwischen $\alpha_{min}$ = 1.5$mrad$ und $\alpha_{max}$ = 100$mrad$ variieren (ist er kleiner, wird er auf 1.5mrad gesetzt, ist er größer wird er als 100mrad angenommen). Alpha $\alpha$ entstammt aus dem Messaufbau nach Augensicherheitsnorm.

• Betrachtet man also eine einzelne Quelle der Vielzahl der Quellen, so gibt es einen Punkt, an dem es sich vom C6-Wert her gesehen, nicht mehr lohnt, die Anzahl der Flächenelemente zu erhöhen, um die scheinbare Ausdehnung weiter zu erhöhen, bzw. ein geringer Mehrwert durch zusätzliche Flächenelemente erhalten wird. Allerdings lohnt es sich unter dem Gesichtspunkt, dass dann die Leitung jeder einzelnen Quelle sinkt

o Typische Werte könnten sein: 2*2 Flächen (N=M=2), 8*8 Flächen(N=M=8), 16*16 Flächen (N=M=16), 20*20 Flächen (N=M=20), 40*40 Flächen (N=M=40) oder auch 100*100 Flächen, (N=M=100) - je nach Durchmesser der Mehrwegeoptik, wobei N auch ungleich M sein kann. Ist bspw. das Aspektverhältnis entlang beider Achsen nicht 1 (der Querschnitt des Strahlenbündels 26 ist beispielsweise eine Ellipse oder ein Rechteck), so kann die Anzahl der Elemente entlang der Achsen auch unterschiedlich sein, beispielsweise: 2*1 Flächen, 2*4 Flächen, 8*16 Flächen, 20*40 Flächen, 40*80 Flächen, 100*200 Flächen usw.

Die Oberflächenelemente müssen nicht zwingend die gleiche räumliche Ausdehnung aufweisen. Single-Mode Laser weisen für kleine oder mittlere Winkel (gemessen zur optischen Achse) ein Intensitätsmaximum auf. Dort verlässt am meisten Leistung den Emitter und auch die Optik. Entgegen der oben getroffenen Vereinfachung führt das dazu, dass nicht alle Quellen bei gleichmäßiger Verteilung die gleiche Leistung aufweisen, da die Leistung nicht gleichmäßig auf alle Oberflächenelemente aufgeteilt würde. In dem beschriebenen Fall würden die Oberflächen in der Mitte überdurchschnittlich viel Leistung emittieren. Es ist deshalb im Rahmen hierin beschriebener Ausführungsbeispiele möglich, die Elemente in ihrer räumlichen Ausdehnung unterschiedlich auszuführen. So könnten beispielsweise jene Elemente im Zentrum kleiner als jene in den Außenbereichen ausgeführt sein. Dies kann beispielsweise durch einen Algorithmus gelöst werden, der die gesamte emittierte Leistung $P_{emission}$ ermittelt und durch die Anzahl N*M der Oberflächenelemente dividiert. Nun wird der Halbraum vor dem Emitter so in N*M Raumwinkel eingeteilt, dass die N*M-Bereiche von jeweils der gleichen Leistung passiert werden. In diesem Bereich werden die einzelnen Oberflächenelemente konstruiert. Als Konsequenz müssten die einzelnen Quellen im Messaufbau dann in etwa die gleiche Leistung aufweisen. In diesem Fall ist die Linse spezifisch auf das Emitterprofil angepasst, da die Position und die Größe der Oberflächenelemente dann vom Emissionsprofil des Emitters zumindest teilweise bestimmt werden. Um die Linse von Gittern oder anderen diffraktiven Elementen abzugrenzen, wird hier darauf hingewiesen, dass die Funktionsweise der Optik nicht auf Interferenzerscheinungen zurückzuführen ist, das bedeutet, die Mehrfachbilder werden nicht durch Interferenz erhalten. Deshalb sind hierin beschriebene Separationsoptiken gut kombinierbar auch mit nicht-kohärenten Quellen.

Hierin beschriebene Ausführungsbeispiele können auch für Beleuchtungsanwendungen verwendet werden. Auch dabei steht die Einhaltung der Augensicherheit einfacher eingehalten wird. Ausführungsbeispiele beziehen sich auf optisch-drahtlose Kommunikation, können aber auch im Bereich des LIDAR und/oder der Gestenerkennung angewendet werden, wo durch eine unkritischere Augensicherheit mittels der hierin beschriebenen Ausführungen die mittlere Sendeleistung verglichen mit bekannten Anwendungen erhöht werden kann. Dies kann bedeuten, dass der zeitliche Abstand zwischen den LIDAR-Pulsen (bei gleicher Pulsdauer) verringert werden kann, so dass die Umgebung schneller abgetastet werden kann. Alternativ oder zusätzlich kann die Sendeleistung erhöht werden, um beispielsweise die Reichweite zu erhöhen. Ausführungsbeispiele ermöglichen ferner eine komplexe Lichtverteilung. Die Freiformoptik formt das Strahlprofil des Emitters in ein anderes, beispielsweise das Logo einer Marke oder andere gewünschte Formen um. Mit dieser Separationsoptik kann eine höhere Leistung verwendet werden, um höhere Reichweiten zu erreichen, mit gleichzeitig unkritischerer Augensicherheit. Ausführungsbeispiele können ferner bei Messvorrichtungen eingesetzt werden, bei denen Laser eingesetzt werden, aber die Gefährdung für das Auge reduziert werden soll. Beispielsweise, weil eine messende Person sich im Messbereich aufhalten soll.

Weitere Ausführungsbeispiele können im Rahmen der industriellen Produktion ohne Weiteres eingesetzt werden.

Ausführungsbeispiele beschreiben einen Hochleistungssender für die optisch-drahtlose Kommunikation, welcher aus einem Modulator, Emitter (Laser) und einer Separationsoptik besteht oder diese zumindest umfasst, wobei es mit der Separationsoptik möglich ist, trotz großer Sendeleistung (etwa mehrere 100 Milliwatt im Durschnitt) die Augensicherheit zu wahren. Durch die höhere Sendeleistung lässt sich das Link-Budget verbessern, das heißt, die Reichweite, Abdeckung und Datenrate erhöhen. Die spezielle Mehrwege-Linse trennt das emittierte Signal mittels Brechung, Reflexion und/oder Totalreflexion in mehrere Teilstrahlen auf und passt gleichzeitig jedes der Strahlbündel an das antizipierte Sichtfeld an. Die Linse ist in dem Spektralbereich der Kommunikation (gegebenenfalls außerhalb einer Beleuchtung) transparent bzw. spiegelnd, das heißt, sie hat dort eine möglichst geringe Absorption.

Bei der Klassifizierung nach DIN EN 60825-1:2015-07 [3] wird zur Bestimmung der Laserklasse eines Lasers die Quelle mittels einer sphärischen Linse auf einen Detektor abgebildet. Da das vom Emitter ausgesendete Strahlbündel eine geringe Ètendue (umgangssprachlich eine geringe Unordnung) aufweist, lässt es sich auf einen besonders kleinen Punkt fokussieren, so dass die Winkelausdehnung der Quelle sehr klein und der zulässige Grenzwert für den Sender dementsprechend sehr gering ist. Um eine möglichst hohe Sendeleistung verwenden zu können bzw. im Rahmen der Vorschriften zu dürfen, wird im Rahmen von Ausführungsbeispielen eine Separationsoptik eingesetzt, um so den zulässigen Grenzwert durch Vergrößerung der Winkelausdehnung der Quelle zu erhöhen. Der einfachen sphärischen Linse im Klassifizierungsaufbau und analog dazu dem menschlichen Auge ist es schwer oder nicht möglich, die einzelnen Strahlbündel auf einen einzelnen Punkt zu fokussieren. Stattdessen ergeben sich im mehrere Fokuspunkte.

Die hierin beschriebenen Ausführungsbeispiele eine Separationsoptik des Hochleistungssenders setzen sich aus mehreren Optikelementen zusammen und unterscheiden sich zu dem eingangs genannten Stand der Technik durch folgende Punkte:

- Jedes einzelne Element der Optik ist eine Freiform und wird analytisch (Bspw. durch Raymapping, Simultanous Multiple Surface Methode, Lösung der Monge-Ampere Gleichung, oder vergleichbare Methoden) oder numerisch berechnet, so dass es an das Sichtfeld angepasst ist, das bedeutet: Ein Großteil (ideal: alles) der emittierten Leistung wir ins Sichtfeld gelenkt. Im Zielfeld ergibt sich dann die antizipierte Bestrahlungsstärke (beispielsweise konstant innerhalb einer Ebene senkrecht zur optischen Achse)

  o Im Vgl. zum Ansatz [2] ermöglicht diese Separationsoptik eine höhere Ausgangsleistung

o Im Vgl. zum Ansatz [1] ermöglicht diese Separationsoptik eine höhere Datenrate

o Im Vgl. zum Ansatz [3] ermöglicht diese Separationsoptik eine höhere Effizienz

o Im Vgl. zum Ansatz [4] besteht diese Separationsoptik aus einer geringeren Anzahl einzelner Elemente, welche einzeln berechnet wurden und auch einzeln funktionieren würden. Eine zusätzliche Kollimatorlinse ist nicht notwendig. Darüber hinaus kann die Linse Laufzeitunterscheide des Signals zwischen dem Zentrum und dem Rand gezielt reduzieren, indem (a) die Dicke zwischen Zentrum und Rand entsprechend variiert wird und (b) nicht jedes der Flächenelemente das gesamte Sichtfeld beleuchtet, wie oben beschrieben.

◦ Im Vgl. zum Ansatz [5] ermöglichen die Freiformen eine nahezu beliebiges Ausgangsprofil, sodass auch ein Ausgangsprofil mit einem kleineren Winkelausdehnung als der des Emitters möglich sind; Darüber hinaus ermöglichen die Freiformen eine sehr "scharfen" Sichtfeldrand, d.h. die Bestrahlungsstärke sinkt dort rapide ab. Letzteres reduziert Inter-Kanal-Übersprechen und erhöht die dynamische Reichweite des Links. Darüber hinaus kann die Linse Laufzeitunterscheide des Signals zwischen dem Zentrum und dem Rand gezielt reduzieren, indem (a) die Dicke zwischen Zentrum und Rand entsprechend variiert wird und (b) nicht jedes wie Flächenelemente das gesamte Sichtfeld beleuchtet, wie oben beschrieben.

- Da die Optikelemente Freiformen sind, werden sie auf die Quelle angepasst. Obwohl jedes Element möglichweise das gleiche Zielfeld beleuchtet, müssen dennoch alle Elemente anders geformt sein, da die relative Position eines jeden Optikelements zur Quelle anders ist.

◦ Im Vgl. zum Ansatz [4] wird dadurch keine Kollimatorlinse benötigt; da nur ein einzelnes Element benötigt wird, sinken Material- und Montagekosten

◦ Im Vgl. zu Ansatz [4] ist die Struktur an jedem Teil der Optik also unterschiedlich; bei Ansatz [4] ist die "Unordnung" der streuenden Elemente über die gesamte Optik hin gleichverteilt

◦ Im Vgl. zu Ansatz [5] wird keine Kollimatorlinse benötigt; da nur ein einzelnes Element benötigt wird, sinken Material- und Montagekosten

◦ Im Vgl. zum Ansatz [6] kann eine einzige Laserquelle verwendet werden

- Die Separationsoptik kann in hoher Stückzahl kostengünstig beispielsweise im Spritzgussverfahren herstellt werden. Das Tool oder einzelne Prototypen werden mittels Ultrapräzisionsdrehen -oder Ultrapräsizionszerspanung geformt.

◦ Im Vgl. zu [4] ist damit eine deutlich kostengünstigere Herstellung möglich

- Je nach Entwurf können die Optikelemente der Separationsoptik so ausgeführt sein, dass jedes das gesamte Sichtfeld ausleuchtet. Durch diese Redundanz wird die Zuverlässigkeit des Kommunikationslinks vergrößert, da nicht ein einzelner Teil des Sichtfeldes vollkommen abgeschattet wird, sondern nur die mittlere Bestrahlungsstärke innerhalb des Sichtfeldes sinkt.
- Die Separationsoptik funktioniert mit einem einzelnen Emitter

◦ Im Vgl. zu [6] wird nur ein einziger Emitter benötigt; in [6] wird in der Quelle ein VCSEL-Array eingesetzt; Dieses Array wird mit einem Mikrolinsen-Array kombiniert. Ausführungsbeispiele unterscheiden sich hiervon auch dadurch, dass das Mikrolinsenarray zur Toleranzkorrektur (Köhler-Integration) genutzt wird und alle Elemente des Mikrolinsenarrays deshalb gleich ausgeführt sind im Gegensatz zu den hierin beschriebenen Ausführungsbeispielen.

Die zulässige Ausgangsleistung des Emitters ist auch mit Mehrwegeoptik nicht unbegrenzt. Sie ergibt sich aus der Anzahl der Optikelemente, der räumlichen Maße der Optik und nichtidealen Streuungen. Die Streuungen treten an den Bereichen zwischen den Optikelementen auf. Hier gibt es typischerweise eine Abrundung (mit Radien im Bereich von einigen bis einigen Hundert Mikrometern).

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literatur

[1] F. Zafar, M. Bakaul and R. Parthiban, "Laser-Diode-Based Visible Light Communication: Toward Gigabit Class Communication," in IEEE Communications Magazine, vol. 55, no. 2, pp. 144-151, February 2017.

[2] E. Säckinger. Analysis and Design of Transimpedance Amplifiers for Optical Receivers. JohnWiley and Sons, 2018.

[3] Norm. DIN EN 60825-1:2015-07: "Sicherheit von Lasereinrichtungen - Teil 1: Klassifizierung von Anlagen und Anforderungen (IEC 60825-1:2014)"

[4] M. R. Pakravan, E. Simova and M. Kavehrad, "Holographic diffusers for indoor infrared communication systems," Proceedings of GLOBECOM'96. 1996 IEEE Global Telecommunications Conference, London, UK, 1996, pp. 1608-1612 vol.3.

[5] WO2013032954 (A1): HIGH SPEED FREE-SPACE OPTICAL COMMUNICATIONS. → Multiple VCSELm Diffusor + Microlens Array

[6] Dobroslav Tsonev, Stefan Videv, and Harald Haas, "Towards a 100 Gb/s visible light wireless access network," Opt. Express 23, 1627-1637 (2015).

**Patentansprüche**

1. Kommunikationsknoten, der zur optisch-drahtlosen Kommunikation in einem optischen, drahtlosen Kommunikationsnetzwerk eingerichtet ist, mit:

    einer Eingangsschnittstelle (12), die ausgebildet ist, um ein Datensignal (14) zu empfangen;
    einem optischen Transmitter (16), der ausgebildet ist, um das Datensignal (14) in ein optisches Signal (18) mit einer optischen Leistung umzusetzen;
    einer Separationsoptik (22), die ausgebildet ist, um das optische Signal (18) in eine Mehrzahl von optischen Teilsignalen (18a-c) mit einem zugeordneten Spektralbereich räumlich zu teilen, um die optische Leistung auf die Mehrzahl von optischen Teilsignalen (18a-c) aufzuteilen, wobei die Mehrzahl von Spektralbereiche zumindest teilweise übereinstimmen;
    wobei der Kommunikationsknoten ausgebildet ist, um die Mehrzahl von optischen Teilsignalen (18a-c) für die optisch-drahtlose Kommunikation auszusenden; und wobei
    die Mehrzahl von optischen Teilsignalen (18a-c) bei einer gemeinsamen Fokussierung, bei Verwendung einer empfängerseitigen Optik (24) oder bei einer Fokussierung am oder im menschlichen Auge an räumlich disjunkten Orten einer Bildebene fokussiert wird.

2. Kommunikationsknoten gemäß Anspruch 1, bei dem die Separationsoptik ausgebildet ist, um einen Laufzeitunterschied von Strahlenbündeln (48) zwischen dem optischen Transmitter (16) und der Separationsoptik durch unterschiedliche Laufzeiten innerhalb der Separationsoptik (22) zumindest teilweise zu kompensieren; oder bei dem ein Element (43) angeordnet ist, um einen Laufzeitunterschied von Strahlenbündeln (48) zwischen dem optischen Transmitter (16) und der Separationsoptik durch unterschiedliche Laufzeiten innerhalb des Elements (43) zumindest teilweise zu kompensieren.

3. Kommunikationsknoten gemäß Anspruch 1 oder 2, bei dem ein Abstand von Brennpunkten bei einer gemeinsamen Fokussierung erhalten wird, deren Strahlungsleistung einzeln unterhalb einer nach DIN EN 60825-1:2015-07 oder IEC 60825-1:2014 definierten Grenze liegen und insgesamt diese Grenze überschreiten.

4. Kommunikationsknoten gemäß einem der vorangehenden Ansprüche, bei dem die Separationsoptik (22) eine Mehrzahl von optisch wirksamen Oberflächen aufweist, von denen jede einem der optischen Teilsignale zugeordnet ist; wobei jede der optisch wirksamen Oberflächen eine individuelle Geometrie und/oder eine individuelle Flächengröße aufweisen, die an eine Relativposition zwischen der optisch wirksamen Oberfläche und dem optischen Transmitter (16) angepasst ist.

5. Kommunikationsknoten gemäß einem der vorangehenden Ansprüche, bei dem die Separationsoptik (22) eine Mehrzahl von optisch wirksamen Oberflächen aufweist, von denen jede einem der optischen Teilsignale zugeordnet ist; wobei dem optisch wirksame Oberflächen der Mehrzahl optisch wirksamer Oberflächen eine unterschiedliche Größe und/oder ein unterschiedliches Aspektverhältnis ihrer Seiten der optisch wirksamen Oberfläche aufweisen.

6. Kommunikationsknoten gemäß Anspruch 4 oder 5, bei dem die Separationsoptik (22) ausgebildet ist, um das optische Signal (18) mittels Totalreflexion an zumindest einer reflektierenden oder totalreflektierenden Oberfläche in eine andere Richtung umzulenken, wobei jeder optisch wirksamen Oberfläche ein Teilbereich der zumindest einen reflektierenden oder totalreflektierenden Oberfläche eindeutig zugeordnet ist.

7. Kommunikationsknoten gemäß Anspruch 6, bei dem die Mehrzahl von optisch wirksamen Oberflächen eine unterschiedliche Flächengröße aufweisen, die mit einem Abstand zu einer optischen Achse des optischen Transmitters (16) zunimmt.

8. Kommunikationsknoten gemäß Anspruch 7, bei dem der optische Transmitter (16) ausgebildet ist, um in einem Bereich, der die optische Achse umfasst, ein Intensitätsmaximum in dem optischen Signal bereitzustellen, wobei die Separationsoptik (22) ausgebildet ist, um basierend auf der unterschiedlichen Flächengröße eine optische Leistung je optisch wirksamer Oberfläche bereitzustellen, die innerhalb eines Toleranzbereichs von 50 %, bevorzugt 30% gleich ist.

9. Kommunikationsknoten gemäß Anspruch 8, bei dem die Separationsoptik (22) eine Mehrzahl von optisch wirksamen Oberflächen aufweist, von denen jede einem der optischen Teilsignale zugeordnet ist; wobei die optisch wirksamen Oberflächen der Mehrzahl optisch wirksamer Oberfläche eine unterschiedliche Größe und/oder ein unterschiedliches Aspektverhältnis ihrer Seiten der optisch wirksamen Oberfläche aufweisen; und der Kommunikationsknoten eine gegenüberliegend der Separationsoptik (22) angeordneten Subreflektor aufweist, der ausgebildet ist, um das optische Signal (18) von dem optischen Transmitter (16) zu empfangen und auf die Separationsoptik (22) zurückzuwerfen.

10. Kommunikationsoptik gemäß Anspruch 9, bei dem der optische Transmitter (16) in einer Ebene der Separationsoptik (22) angeordnet ist.

11. Kommunikationsknoten gemäß einem der vorangehenden Ansprüche, bei dem eine optische Signalleistung des optischen Signals (18) ohne die Separationsoptik (22) eine Augensicherheit für das menschliche Auge überscheitet und die Mehrzahl von optischen Teilsignalen (18a-c) in Summe die Augensicherheit wahrt.

12. Kommunikationsknoten gemäß einem der vorangehenden Ansprüche, bei dem die Separationsoptik (22) ausgebildet ist, um ein Mehrfachbild des optischen Signals des Transmitters (16) zu erzeugen.

13. Kommunikationsknoten gemäß einem der vorangehenden Ansprüche, der ausgebildet ist, um das optische Signal (18) in einem für das menschliche Auge sichtbaren Wellenlängenbereich auszusenden, und um mit dem drahtlosen, optischen Signal eine Beleuchtung einer Umgebung des Kommunikationsknotens zu bereitzustellen.

14. Optisch-drahtloses Übertragungssystem, umfassend:

   einen Kommunikationsknoten gemäß einem der vorangehenden Ansprüche; und
   einen Empfänger (25), der ausgebildet ist, um zumindest einen Anteil der Mehrzahl von Teilsignalen (18a-c) zu empfangen; wobei ein Sichtfeld des Kommunikationsknotens an eine Empfangsoptik des Empfängers angepasst ist.

15. Verfahren zum Bereitstellen einer Separationsoptik für einen optisch-drahtlosen Kommunikationsknoten mit einer Mehrzahl von optisch aktiven Oberflächen, bei dem für jede der optisch aktiven Oberflächen folgende Schritte ausgeführt werden:

   Projizieren (610) einer inhomogenen Strahlungsleistung eines optischen Emitters auf einen Projektionsbereich, durch Definieren einer Vielzahl von Teilbereichen des Projektionsbereichs, so dass Teilstrahlungsleistungen der auf die Teilbereiche auftreffenden Strahlungsleistung innerhalb eines Toleranzbereichs in der Vielzahl von Teilbereichen gleich ist;
   Definieren (620) von Eingangswinkeln der Strahlungsleistung auf die optisch-aktive Fläche der Separationsoptik und Zuordnen jeweils eines zugehörigen Ausgangswinkels der Vielzahl von Teilstrahlungsleistungen aus der Separationsoptik, wobei die Ausgangswinkel aus den Teilbereich des Projektionsbereiches abgeleitet werden;

Definieren (630) der Vielzahl der Teilbereiche für die optisch aktive Oberfläche der Separationsoptik so, dass diese bei einem Eintreffen der Strahlungsleistung diese mit der Vielzahl von Teilbereichen in eine einem jeweiligen Teilbereich zugeordnete Teilstrahlungsleistung für den Projektionsbereich umformt; und
Herstellen (640) der Separationsoptik mit der Vielzahl von optisch wirksamen Oberflächen;
so dass die Mehrzahl von optischen Teilsignalen (18a-c) bei einer gemeinsamen Fokussierung, bei Verwendung einer empfängerseitigen Optik (24) oder bei einer Fokussierung am oder im menschlichen Auge an räumlich disjunkten Orten einer Bildebene fokussiert wird.

**Claims**

1. A communication node configured for optical-wireless communication in an optical wireless communication network and comprising:

   an input interface (12) configured to receive a data signal (14);
   an optical transmitter (16) configured to convert the data signal (14) into an optical signal (18) having an optical power;
   separation optics (22) configured to spatially divide the optical signal (18) into a plurality of optical partial signals (18a-c) having an associated spectral range to divide the optical power onto the plurality of optical partial signals (18a-c), the plurality of spectral ranges at least partially coinciding;
   wherein the communication node is configured to emit the plurality of optical partial signals (18a-c) for the optical-wireless communication; and wherein
   the plurality of optical partial signals (18a-c) is focused at spatially disjoint locations of an image plane when focused together, when using receiver-side optics (24) or when focusing at or in the human eye.

2. The communication node according to claim 1, wherein the separation optics is configured to at least partly compensate for a transit time difference of beams (48) between the optical transmitter (16) and the separation optics due to different transit times within the separation optics (22); or
   wherein an element (43) is arranged to at least partly compensate for a transit time difference of beams (48) between the optical transmitter (16) and the separation optics due to different transit times within the element (43).

3. The communication node according to claim 1 or 2, wherein a spacing of focal points is obtained with focusing together, the radiated power of which are each below a limit defined according to DIN EN 60825-1:2015-07 or IEC 60825-1:2014 and in total exceed this limit.

4. The communication node according to any of the preceding claims, wherein the separation optics (22) comprises a plurality of optically active surfaces, each of which is associated with one of the optical partial signals, wherein each of the optically effective surfaces has an individual geometry and/or an individual area size adapted to a relative position between the optically effective surface and the optical transmitter (16).

5. The communication node according to any of the preceding claims, wherein the separation optics (22) comprises a plurality of optically active surfaces, each of which is associated with one of the optical partial signals, wherein optically effective surfaces of the plurality of optically effective surfaces have a different size and/or different aspect ratio of their sides of the optically effective surface.

6. The communication node according to claim 4 or 5, wherein the separation optics (22) is configured to redirect the optical signal (18) in another direction by means of total reflection at at least one reflective or totally reflective surface, each optically effective surface being unambiguously associated with a partial region of the at least one reflective or totally reflective surface.

7. The communication node according to claim 6, wherein the plurality of optically effective surfaces has a different area size which increases with an increasing distance from an optical axis of the optical transmitter (16).

8. The communication node according to claim 7, wherein the optical transmitter (16) is configured to provide an intensity maximum in the optical signal in a region comprising the optical axis, wherein the separation optics (22) is configured to provide an optical power per optically effective surface which is equal within a tolerance range of 50%, preferably 30%, based on the different area size.

9. The communication node according to claim 8, wherein the separation optics (22) comprises a plurality of optically active surfaces, each of which is associated with one of the optical partial signals, wherein the optically effective surfaces of the plurality of optically effective surfaces have a different size and/or different aspect ratio of their sides of the optically effective surface; and the communication node comprises a subreflector arranged opposite the separation optics (22) and configured to receive the optical signal (18) from the optical transmitter (16) and to reflect it back to the separation optics (22).

10. The communication optics according to claim 9, wherein the optical transmitter (16) is arranged in a plane of the separation optics (22).

11. The communication node according to any of the preceding claims, wherein an optical signal power of the optical signal (18) without the separation optics (22) exceeds an eye safety for the human eye and the plurality of optical partial signals (18a-c) in sum maintains the eye safety.

12. The communication node according to any of the preceding claims, wherein the separation optics (22) is configured to produce a multiple image of the optical signal of the transmitter (16).

13. The communication node according to any of the preceding claims, configured to emit the optical signal (18) in a wavelength range visible to the human eye, and to provide illumination of an environment of the communication node with the wireless optical signal.

14. An optical-wireless transmission system comprising:

a communication node according to any of the preceding claims; and
a receiver (25) configured to receive at least a portion of the plurality of partial signals (18a-c); wherein a field of view of the communication node is adapted to receiving optics of the receiver.

15. A method of providing separation optics for an optical-wireless communication node having a plurality of optically active surfaces, wherein the following steps are performed for each of the optically active surfaces:

projecting (610) an inhomogeneous radiation power of an optical emitter onto a projection region by defining a plurality of sub-regions of the projection region such that partial radiation powers of the radiation power incident on the sub-regions are equal within a tolerance range in the plurality of sub-regions;
defining (620) input angles of radiation power onto the optically active area of the separation optics and associating a respective output angle each to the plurality of partial radiation powers from the separation optics, the output angles being derived from the sub-region of the projection region;
defining (630) the plurality of sub-regions for the optically active surface of the separation optics such that, when the radiation power arrives, the separation optics transforms the radiation power with the plurality of sub-regions into a partial radiation power for the projection area associated with a respective sub-region; and
producing (640) the separation optics having the plurality of optically effective surfaces;
such that the plurality of optical partial signals (18a-c) is focused at spatially disjoint locations of an image plane when focused together, when using receiver-side optics (24) or when focusing at or in the human eye.

**Revendications**

1. Nœud de communication qui est mis en place pour une communication optique sans fil dans un réseau de communication optique sans fil, avec :

une interface d'entrée (12), qui est conçue pour recevoir un signal de données (14) ;
un émetteur optique (16), qui est conçu pour convertir le signal de données (14) en un signal optique (18) avec une puissance optique ;
un système optique de séparation (22), qui est conçu pour diviser spatialement le signal optique (18) en une pluralité de signaux optiques partiels (18a-c) avec une zone spectrale associée afin de répartir la puissance optique sur la pluralité de signaux optiques partiels (18a-c), la pluralité de zones spectrales concordant au moins partiellement ;
dans lequel le nœud de communication est conçu pour envoyer la pluralité de signaux optiques partiels (18a-c) pour la communication optique sans fil ; et

dans lequel la pluralité de signaux optiques partiels (18a-c) lors d'une focalisation conjointe, lors de l'utilisation d'une optique côté récepteur (24) ou lors d'une focalisation sur ou dans l'œil humain, est focalisée sur des emplacements spatialement disjoints d'un plan d'image.

2. Nœud de communication selon la revendication 1, dans lequel le système optique de séparation est conçu pour compenser au moins partiellement une différence de temps de trajet de faisceaux de rayonnement (48) entre l'émetteur optique (16) et le système optique de séparation par des temps de trajet différents à l'intérieur du système optique de séparation (22) ; ou

dans lequel un élément (43) est disposé pour compenser au moins partiellement une différence de temps de trajet de faisceaux de rayonnement (48) entre l'émetteur optique (16) et le système optique de séparation par des temps de trajet différents à l'intérieur de l'élément (43).

3. Nœud de communication selon la revendication 1 ou 2, dans lequel une distance de points focaux est obtenue lors d'une focalisation conjointe dont la puissance rayonnée est, de manière individuelle, inférieure à une limite définie selon la norme DIN EN 60825-1:2015-07 ou IEC 60825-1:2014 et, dans sa totalité, dépasse cette limite.

4. Nœud de communication selon l'une des revendications précédentes,

dans lequel le système optique de séparation (22) présente une pluralité de surfaces optiquement efficaces dont chacune est associée à l'un des signaux optiques partiels ;

dans lequel chacune des surfaces optiquement efficaces présente une géométrie individuelle et/ou une taille de surface individuelle qui est adaptée à une position relative entre la surface optiquement efficace et l'émetteur optique (16).

5. Nœud de communication selon l'une des revendications précédentes,

dans lequel le système optique de séparation (22) présente une pluralité de surfaces optiquement efficaces dont chacune est associée à l'un des signaux optiques partiels ;

dans lequel les surfaces optiquement efficaces de la pluralité de surfaces optiquement efficaces présentent une taille différente et/ou un rapport d'aspect différent de leurs côtés de la surface optiquement efficace.

6. Nœud de communication selon la revendication 4 ou 5, dans lequel le système optique de séparation (22) est conçu pour rediriger le signal optique (18) dans une autre direction à l'aide d'une réflexion totale sur au moins une surface réfléchissante ou totalement réfléchissante, une zone partielle de l'au moins une surface réfléchissante ou totalement réfléchissante étant associée de manière unique à chaque surface optiquement efficace.

7. Nœud de communication selon la revendication 6, dans lequel la pluralité de surfaces optiquement efficaces présente une taille de surface différente qui augmente avec une distance par rapport à un axe optique de l'émetteur optique (16).

8. Nœud de communication selon la revendication 7,

dans lequel l'émetteur optique (16) est conçu pour fournir un maximum d'intensité dans le signal optique dans une zone qui comprend l'axe optique,

dans lequel le système optique de séparation (22) est conçu pour fournir, sur la base de la taille de surface différente, une puissance optique par surface optiquement efficace qui est égale à l'intérieur d'une plage de tolérance de 50 %, de préférence de 30 %.

9. Nœud de communication selon la revendication 8,

dans lequel le système optique de séparation (22) présente une pluralité de surfaces optiquement efficaces dont chacune est associée à l'un des signaux optiques partiels ;

dans lequel les surfaces optiquement efficaces de la pluralité de surfaces optiquement efficaces présentent une taille différente et/ou un rapport d'aspect différent de leurs côtés de la surface optiquement efficace ;

et le nœud de communication présente un sous-réflecteur disposé à l'opposé du système optique de séparation (22) et qui est conçu pour recevoir le signal optique (18) de l'émetteur optique (16) et pour le réfléchir sur le système optique de séparation (22).

**10.** Optique de communication selon la revendication 9, dans lequel l'émetteur optique (16) est disposé dans un plan du système optique de séparation (22).

**11.** Nœud de communication selon l'une des revendications précédentes, dans lequel une puissance de signal optique du signal optique (18) sans le système optique de séparation (22) dépasse la sécurité oculaire pour l'œil humain et la pluralité de signaux optiques partiels (18a-c) au total respecte la sécurité oculaire.

**12.** Nœud de communication selon l'une des revendications précédentes, dans lequel le système optique de séparation (22) est conçu pour générer une image multiple du signal optique de l'émetteur (16).

**13.** Nœud de communication selon l'une des revendications précédentes, qui est conçu pour envoyer le signal optique (18) dans une plage de longueurs d'onde visible pour l'œil humain et pour fournir avec le signal optique sans fil un éclairage d'un environnement du nœud de communication.

**14.** Système de transmission optique sans fil comprenant :

un nœud de communication selon l'une des revendications précédentes ; et
un récepteur (25), qui est conçu pour recevoir au moins une partie de la pluralité de signaux partiels (18a-c) ; dans lequel un champ de vision du nœud de communication est adapté à une optique de réception du récepteur.

**15.** Procédé destiné à fournir un système optique de séparation pour un nœud de communication optique sans fil avec une pluralité de surfaces optiquement actives, dans lequel les étapes suivantes sont réalisées pour chacune des surfaces optiquement actives :

projeter (610) une puissance rayonnée inhomogène d'un émetteur optique sur une zone de projection en définissant une multitude de zones partielles de la zone de projection de telle sorte que les puissances rayonnées partielles de la puissance rayonnée incidente sur les zones partielles soient égales à l'intérieur d'une plage de tolérance dans la multitude de zones partielles ;
définir (620) des angles d'entrée de la puissance rayonnée sur la surface optiquement active du système optique de séparation et affecter respectivement un angle de sortie correspondant à la multitude de puissances rayonnées partielles en provenance du système optique de séparation, les angles de sortie étant dérivés de la zone partielle de la zone de projection ;
définir (630) la multitude de zones partielles pour la surface optiquement active du système optique de séparation de telle sorte que, à l'arrivée de la puissance rayonnée, celui-ci la convertit avec la multitude de zones partielles en une puissance rayonnée partielle associée à une zone partielle respective pour la zone de projection ; et
produire (640) le système optique de séparation avec la multitude de surfaces optiquement efficaces ;
de telle sorte que la pluralité de signaux optiques partiels (18a-c) lors d'une focalisation conjointe, lors de l'utilisation d'une optique côté récepteur (24) ou lors d'une focalisation sur ou dans l'œil humain soit focalisée sur des emplacements spatialement disjoints d'un plan d'image.

Fig. 1

EP 4 150 792 B1

Fig. 2a

Fig. 2b

Fig. 3a

EP 4 150 792 B1

Fig. 3b

EP 4 150 792 B1

Fig. 3c

EP 4 150 792 B1

Fig. 4a

Fig. 4b

Fig. 5a

Fig. 5b

EP 4 150 792 B1

Projizieren einer inhomogenen Strahlungsleistung eines optischen Emitters auf einen Projektionsbereich durch Definieren einer Vielzahl von Teilbereichen des Projektionsbereichs, so dass Teilstrahlungsleistungen der auf die Teilbereiche auftreffenden Strahlungsleistungen innerhalb eines Toleranzbereichs in der Vielzahl von Teilbereichen gleich ist

610

Definieren von Eingangswinkeln der Strahlungsleistung auf die optisch-aktive Fläche der Separationsoptik und Zuordnen jeweils eines zugehörigen Ausgangswinkels der Vielzahl von Teilstrahlungsleistungen aus der Separationsoptik, wobei diese Ausgangwinkel aus den Teilbereich des Projektionsbereiches abgeleitet werden

620

Definieren der Vielzahl der Teilbereiche für die optisch aktive Oberfläche der Separationsoptik so, dass diese bei einem Eintreffen der Strahlungsleistung diese mit der Vielzahl von Teilbereichen in eine einem jeweiligen Teilbereich zugeordneten Teilstrahlungsleistung für den Projektionsbereich umformt

630

Herstellen der Separationsoptik mit der Vielzahl von optisch wirksamen Oberflächen

640

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030026002 A1
- WO 02056507 A2
- US 20110116520 A1
- WO 2013032954 A1

**In der Beschreibung aufgeführte Nicht-Patentliteratur**

- **F. ZAFAR** ; **M. BAKAUL** ; **R. PARTHIBAN**. Laser-Diode-Based Visible Light Communication: Toward Gigabit Class Communication. *IEEE Communications Magazine*, February 2017, vol. 55 (2), 144-151
- **E. SÄCKINGER**. Analysis and Design of Transimpedance Amplifiers for Optical Receivers. JohnWiley and Sons, 2018
- **M. R. PAKRAVAN** ; **E. SIMOVA** ; **M. KAVEHRAD**. Holographic diffusers for indoor infrared communication systems. *Proceedings of GLOBECOM'96. 1996 IEEE Global Telecommunications Conference*, 1996, vol. 3, 1608-1612
- **DOBROSLAV TSONEV** ; **STEFAN VIDEV** ; **HARALD HAAS**. Towards a 100 Gb/s visible light wireless access network. *Opt. Express*, 2015, vol. 23, 1627-1637